# EUROPÄISCHE PATENTSCHRIFT

(11) **EP 4 279 741 B1**
(45) Veröffentlichungstag und Bekanntmachung des Hinweises auf die Patenterteilung: **20.11.2024**
(21) Anmeldenummer: 22174128.3
(22) Anmeldetag: 18.05.2022
(51) Int. Cl.: F04B 41/02, F04B 37/02, F04B 37/04, F04B 37/18, F17C 5/06, C01B 3/00

(54) **GASVERDICHTUNGSSYSTEM UND VERFAHREN ZUR RÜCKGEWINNUNG VON WASSERSTOFF**
GAS COMPRESSION SYSTEM AND METHOD FOR RECOVERING HYDROGEN
SYSTÈME DE COMPRESSION DE GAZ ET PROCÉDÉ DE RÉCUPÉRATION DE L'HYDROGÈNE

(43) Veröffentlichungstag der Anmeldung: 22.11.2023
(73) Patentinhaber: Burckhardt Compression AG, 8404 Winterthur (CH)
(72) Erfinder: VALÄR, Adrian Luzi, 8404 Winterthur (CH); HARDER, Thorsten, 8404 Winterthur (CH)
(74) Vertreter: Hepp Wenger Ryffel AG

(56) Entgegenhaltungen:
- EP-A1- 3 121 446
- EP-A1- 3 163 081
- EP-A2- 0 333 632
- EP-A2- 2 071 225
- WO-A1-2015/074740
- JP-A- 2011 132 876
- MATSUNAGA T ET AL: "TiCrVMo alloys with high dissociation pressure for high-pressure MH tank", INTERNATIONAL JOURNAL OF HYDROGEN ENERGY, ELSEVIER, AMSTERDAM, NL, vol. 34, no. 3, 2 February 2009 (2009-02-02), pages 1458 - 1462, XP025922644, ISSN: 0360-3199, [retrieved on 20090128], DOI: 10.1016/J.IJHYDENE.2008.11.061
- SAKINTUNA ET AL: "Metal hydride materials for solid hydrogen storage: A review", INTERNATIONAL JOURNAL OF HYDROGEN ENERGY, ELSEVIER, AMSTERDAM, NL, vol. 32, no. 9, 23 May 2007 (2007-05-23), pages 1121 - 1140, XP022093235, ISSN: 0360-3199, DOI: 10.1016/J.IJHYDENE.2006.11.022

## Beschreibung

Die vorliegende Erfindung betrifft ein Gasverdichtungssystem, ein Verfahren zur Rückgewinnung von Wasserstoff, welcher bei einem Verdichter als Leckgas anfällt, sowie eine Wasserstofftankstelle umfassend ein Gasverdichtungssystem wie nachfolgend beschrieben.

Wasserstofftankstellen dienen der Betankung von Brennstoffzellenfahrzeugen mit Wasserstoffkraftstoff. Aus dem Stand der Technik bekannte Wasserstofftankstellen sind so aufgebaut, dass der Wasserstoff von einem Speichertank, der den Wasserstoff enthält, entnommen, in einem Kompressor unter Druck gesetzt und in das Wasserstofffahrzeug geleitet wird. Die Verdichtung von Wasserstoff stellt sich dabei aufgrund des geringen Molgewichts (auch als molare Masse, Molmasse oder stoffmengenbezogene Masse bezeichnet) von Wasserstoff technisch anspruchsvoll dar, insbesondere bei grösseren Volumenströmen. Für Wasserstoffgas, welches in ein Brennstoffzellenfahrzeug gefüllt werden soll, wird zwischenzeitlich eine hohe Reinheit und ein hoher Druck, insbesondere von mehr als 400 bar, verlangt.

Die EP 3 121 446 A1 beschreibt einen ölgeschmierten Kolbenkompressor zur Verdichtung von Wasserstoff sowie ein Betankungssystem zur Abgabe von Wasserstoff mit einem hohen Druck an ein brennstoffzellenbetriebenes Fahrzeug. Nachteilig an der Verwendung eines derartigen ölgeschmierten Kolbenkompressors ist jedoch, dass der Ölgehalt im ausgestossenen Wasserstoffgas vor der Abgabe an einen Verbraucher so weit wie möglich reduziert werden muss, um die Funktionsweise der Brennstoffzelle nicht zu beeinträchtigen oder gar eine Beschädigung derselben zu vermeiden. Zu diesem Zweck werden beispielsweise entsprechend ausgebildete Abscheidevorrichtungen und/oder Filter eingesetzt, welche stromabwärts der letzten Verdichtungsstufe angeordnet sind. Das Erfordernis für Abscheidevorrichtungen und/oder Filter zur Abtrennung von Schmiermittel vom verdichteten Wasserstoff führt zu einem erhöhen Wartungsaufwand derartiger Gasverdichtungssysteme und letztlich zu höheren Betriebskosten.

Aus dem Stand der Technik bekannte Kolbenverdichter können oft nicht druckgekapselt gebaut werden, wodurch eine gewisse Leckage des zu verdichtenden Mediums an die Umgebung in Kauf genommen werden muss. Beispielsweise offenbart die JP 2011-132876 A einen Kolbenverdichter zur Verdichtung von Wasserstoff, bei dem die Leckage von Wasserstoff aus dem Verdichter in die Umwelt in Kauf genommen wird. Aufgrund der Brennbarkeit und der Fähigkeit zur Bildung explosiver Gemische weist ein derartiges System - neben der Verschwendung wertvoller Ressourcen und den damit verbundenen ökonomischen Nachteilen - je nach Einsatzort des Verdichters auch ein erhebliches Sicherheitsrisiko auf.

Zur Vermeidung des Leckageverlusts schlägt die WO 2015/074740 A1 eine Leckagerückleitung vor, welche vom Innenraum des Kolbenverdichtergehäuses zum Einlass am ersten Zylinderkopf des Verdichters verläuft. Das Gehäuse des Kolbenverdichters ist demnach zumindest bis zum Saugdruck der ersten Verdichterstufe druckfest ausgestaltet. Nachteilig an einer druckfesten Lösung ist jedoch, dass der konstruktive Aufwand sowie die Investitionskosten dafür vergleichsweise höher ausfallen, als dies bei nicht-druckfesten Verdichtergehäusen der Fall ist. Zudem wird das Problem der unkontrollierten Freisetzung von Wasserstoff in die Umwelt auch durch ein solches System nicht zufriedenstellend gelöst, da die darin verwendeten statischen Dichtungen nur bedingt eine leckagefreie Abdichtung des im Gehäuse vorliegenden Wasserstoffüberdrucks ermöglichen.

Aus der EP 3 163 081 A1 ist schliesslich ein Gasverdichtungssystem für Wasserstoff bekannt, in dem die Wasserstoffleckage eines Hauptverdichters einem Hilfsverdichter zugeführt wird, wobei es sich bei beiden Verdichtern um Kolbenverdichter handelt. Der durch den Hilfsverdichter komprimierte Wasserstoff wird einem Rückgewinnungstank und von dort erneut der Saugleitung des Hauptverdichters zugeführt. Aufgrund der Verwendung mehrerer Kolbenverdichter mit einer Vielzahl an beweglichen Teilen und einem potentiell hohen Wartungsaufwand sowie der Druckschwankungen, die sich aus der oszillierenden Arbeitsweise von Hubkolbenmaschinen ergeben und den Einsatz von Hilfstanks als Pulsationsdämpfer erfordern, weist allerdings auch dieses Gasverdichtungssystem aus dem Stand der Technik gewisse Nachteile auf.

Ausgehend von dem genannten Stand der Technik liegt der vorliegenden Erfindung die Aufgabe zugrunde, solche und weitere Nachteile des Standes der Technik zu beheben und insbesondere ein Gasverdichtungssystem zum Verdichten von Wasserstoff bereitzustellen, welches zuverlässig und wartungsarm ist und mit geringen Kosten, einschliesslich der Kosten für den Stromverbrauch, betrieben werden kann.

Die Aufgabe wird durch ein Gasverdichtungssystem zum Verdichten von Wasserstoff, ein Verfahren zur Rückgewinnung von Wasserstoff, und eine Wasserstofftankstelle umfassend ein erfindungsgemässes Gasverdichtungssystem gemäss den unabhängigen Ansprüchen gelöst. Vorteilhafte Ausgestaltungen und Weiterbildungen sind Gegenstand der abhängigen Ansprüche.

Die Aufgabe wird insbesondere gelöst mit einem Gasverdichtungssystem aufweisend einen Verdichter zum Verdichten von Wasserstoff. Der Verdichter weist eine Leckgasabführleitung zur Abführung des Wasserstoffs, welcher beim Verdichten als Leckgas anfällt, vom Verdichter auf. Das Gasverdichtungssystem weist ferner wenigstens eine Rückgewinnungseinrichtung zur Rückgewinnung des Wasserstoffs, welcher beim Verdichten als Leckgas anfällt, sowie eine Leckgasrückführleitung auf. Die Leckgasrückführleitung ist dazu ausgelegt, das durch die wenigstens eine Rückgewinnungseinrichtung zurückgewonnene Leckgas in eine Stelle im Gasverdichtungssystem vor dem Verdichter zurückzuführen. Alternativ oder zusätzlich dazu ist die Leckgasrückführleitung dazu ausgelegt, das durch die wenigstens eine Rückgewinnungseinrichtung zurückgewonnene Leckgas in die Saugleitung einer Verdichterstufe des Verdichters zurückzuführen. Jede Rückgewinnungseinrichtung ist mit der Leckgasabführleitung und der Leckgasrückführleitung fluidisch verbindbar und weist jeweils zumindest einen Metallhydridspeicher auf. Jeder Metallhydridspeicher ist dabei mit jeweils einem Wärmetauscher wärmegekoppelt und weist wenigstens eine hydridbildende Metalllegierung auf, welche unter Wärmezufuhr bzw. Wärmeabfuhr durch den jeweiligen Wärmetauscher zur zyklischen De- bzw. Absorption des Leckgases ausgebildet ist. Die im Gasverdichtungssystem vorhandenen Rückgewinnungseinrichtungen sind zur Erhöhung des in der Leckgasabführleitung herrschenden Leckgasdrucks (*p*_{L}) auf wenigstens den in der Stelle des Gasverdichtungssystems herrschenden Druck (*p*) und/oder auf wenigstens den in der Saugleitung der Verdichterstufe herrschenden Saugdruck (*p*ₛ) ausgebildet.

Der Einsatz von Metallhydriden stellt eine vielversprechende Methode zur Wasserstoffverdichtung dar, welche ohne bewegliche Teile und mit nur geringem Energiebedarf auskommt. Bei dieser Methode wird eine reversible wärmegetriebene Wechselwirkung eines hydridbildenden Metalls, einer Legierung oder einer intermetallischen Verbindung mit Wasserstoffgas zur Bildung eines Metallhydrids genutzt. Dabei wird die exotherme Bildung des Metallhydrids durch Absorption von Niederdruck-Wasserstoff im hydridbildenden Material bei einer niedrigen Temperatur begünstigt, d.h. unter Wärmeabfuhr vom hydridbildenden Material. Andererseits wird die endotherme Zersetzung des Metallhydrids durch Desorption von Hochdruck-Wasserstoff aus dem Metallhydrid bei einer höheren Temperatur begünstigt, d.h. unter Wärmezufuhr zum Metallhydrid. Auf diese Weise lässt sich durch periodische Abkühlung und Erwärmung des hydridbildenden Materials bzw. des Metallhydrids eine periodische Niederdruck-Wasserstoffabsorption bzw. Hochdruck-Wasserstoffdesorption erzielen, ähnlich den Saug- und Druckvorgängen in einem mechanischen Kompressor. Eine auf diesem Prinzip beruhende Vorrichtung wird daher nachfolgend auch als Metallhydridkompressor bezeichnet.

Im Rahmen der vorliegenden Erfindung wird unter einem "Verdichter zum Verdichten von Wasserstoff" (im Folgenden einfach als "Verdichter" bezeichnet) eine Einrichtung zum Erhöhen des Drucks und der Dichte des als Arbeitsgas des Verdichters dienenden Wasserstoffs verstanden, beispielsweise ein Hubkolbenverdichter, ein ionische Verdichter, ein Schraubenverdichter oder ein Membranverdichter, jedoch mit der Massgabe, dass es sich bei dem Verdichter nicht um einen Metallhydridkompressor handelt. Erfindungsgemäss handelt es sich bei der wenigstens einen Rückgewinnungseinrichtung zur Erhöhung des Leckgasdrucks auf den Saugdruck um einen ein- oder mehrstufigen Metallhydridkompressor.

Das erfindungsgemässe Gasverdichtungssystem weist eine einfache Konfiguration auf, ist zuverlässig, wartungsarm und ermöglicht eine periodisch betriebene Wasserstoffrückgewinnung mit geringen Betriebskosten. Die Verwendung von Metallhydridspeichern ermöglicht darüber hinaus die Erzielung hoher Verdichtungsverhältnisse bei geringem Stromverbrauch sowie eine hohe Reinheit des rückgewonnenen Wasserstoffs.

Bei dem Verdichter des erfindungsgemässen Gasverdichtungssystems kann es sich insbesondere auch um einen mehrstufigen Verdichter mit einer Vielzahl von Verdichterstufen handeln, welche zur schrittweisen Verdichtung des Arbeitsgases konfiguriert sind.

Bevorzugt ist die Leckgasrückführleitung dazu ausgelegt, das durch die wenigstens eine Rückgewinnungseinrichtung zurückgewonnene Leckgas in die Saugleitung einer ersten Verdichterstufe des Verdichters zurückzuführen. Dadurch muss der Druck des Leckgases lediglich auf den relativ niedrigen Druck erhöht werden, welcher in der Saugleitung der ersten Verdichterstufe herrscht, beispielsweise auf einen Druck von etwa 30 bar.

In einer bevorzugten Ausführungsform umfasst das erfindungsgemässe Gasverdichtungssystem eine erste Rückgewinnungseinrichtung und eine zweite Rückgewinnungseinrichtung, welche parallel geschaltet sind, sodass ein voneinander zeitlich unabhängiges Be- und Entladen der in den jeweiligen Rückgewinnungseinrichtungen angeordneten Metallhydridspeicher möglich ist.

Das Vorsehen mehrerer parallel geschalteter Rückgewinnungseinrichtungen ermöglicht die Verwendung des erfindungsgemässen Gasverdichtungssystems in einem kontinuierlichen Prozess bzw. zur kontinuierlichen Rückgewinnung von kontinuierlich anfallendem Leckgas.

Ein weiteres Problem, das sich aus dem Betrieb eines Metallhydridkompressors in einem grösseren Temperaturbereich ergibt, sind die hohen thermischen Spannungen, die in den Metallhydridspeichern zu Beginn der Erwärmungs- und Kühl-Halbzyklen auftreten. Berücksichtigt man die zusätzlichen Spannungen, die durch die Erhöhung des Gasdrucks bei der Hydriddesorption (Erwärmung) und die Erhöhung des Volumens der hydridbildenden Metalllegierungen bei der Hydridbildung (Abkühlung) entstehen, so erhöht sich die Wahrscheinlichkeit einer Beschädigung der Metallhydridspeicher, beispielsweise durch Rissbildung, was die Standzeit und die Sicherheit des Betriebs erheblich reduziert.

Um den Arbeitstemperaturbereich jedes Metallhydridspeichers im Betrieb möglichst gering halten zu können, weist in einer weiteren bevorzugten Ausführungsform des Gasverdichtungssystems jede Rückgewinnungseinrichtung eine Mehrzahl von Metallhydridspeichern auf. Die Metallhydridspeicher sind dabei, in Strömungsrichtung des Leckgasstroms gesehen, miteinander in Reihe geschaltet und mit jeweils einem Wärmetauscher wärmegekoppelt. Die in Reihe geschalteten Metallhydridspeicher weisen jeweils wenigstens eine hydridbildende Metalllegierung auf, welche unter Wärmezufuhr bzw. Wärmeabfuhr durch den jeweiligen Wärmetauscher zur zyklischen De- bzw. Absorption von Wasserstoff ausgebildet sind. Der in jeder Rückgewinnungseinrichtung in Strömungsrichtung zuerst angeordnete erste Metallhydridspeicher ist zur Erhöhung des Drucks des Leckgases von dem Leckgasdruck (p_{L}) auf einen im Vergleich zum Leckgasdruck (p_{L}) höheren ersten Zwischendruck (p₁) ausgebildet. Der in jeder Rückgewinnungseinrichtung in Strömungsrichtung zuletzt angeordnete letzte Metallhydridspeicher ist zur Erhöhung des Drucks des Leckgases auf den Saugdruck (pₛ) ausgebildet. Die zwischen dem ersten und dem letzten Metallhydridspeicher angeordneten Metallhydridspeicher sind jeweils zur stufenweise Erhöhung des Drucks des Leckgases auf einen im Vergleich zum ersten Zwischendruck (p₁) höheren Zwischendruck (p₂, P₃ ... pₙ) ausgebildet.

Sofern nichts Gegenteiliges angegeben wird, bezieht sich der Begriff "Strömungsrichtung" stets auf die Flussrichtung des Leckgasstroms im erfindungsgemässen Gasverdichtungssystem.

Bevorzugt weisen die in Reihe geschalteten Metallhydridspeicher dabei jeweils eine voneinander verschiedene hydridbildende Metalllegierung auf. Dies erlaubt die Erzielung eines höheren Verdichtungsverhältnisses.

In einer besonders bevorzugten Ausführungsform des erfindungsgemässen Gasverdichtungssystems enthalten die in Reihe geschalteten Metallhydridspeicher voneinander verschiede hydridbildende Metalllegierungen, wobei die thermische Stabilität der hydrierten Metalllegierungen in Flussrichtung, d.h. im Vergleich zum vorhergehend angeordneten Metallhydridspeicher, abnimmt.

Eine Erhöhung der Anzahl an Metallhydridspeichern in den Rückgewinnungseinrichtungen, respektive eine Erhöhung der Stufenzahl des somit gebildeten Metallhydridkompressors, führt allerdings zu einer Verringerung des Wirkungsgrads, weshalb bevorzugt jede Rückgewinnungseinrichtung lediglich zwei Metallhydridspeicher aufweist.

In einer bevorzugten Ausführungsform des erfindungsgemässen Gasverdichtungssystems ist der Verdichter des Gasverdichtungssystems als Kolbenverdichter ausgebildet, wodurch das erfindungsgemässe Gasverdichtungssystem auch auf weit verbreitete, bestehende Verdichter übertragbar bzw. nachrüstbar ist.

Vorzugsweise ist der Verdichter des Gasverdichtungssystems als trockenlaufender Kolbenverdichter ausgebildet. Trockenlaufende Kolbenkompressoren sind Kompressoren, die im Verdichtungsteil ohne Fremdschmiermittel, wie beispielsweise Schmieröl, arbeiten. Dadurch wird die Gefahr einer Kontamination des verdichteten Wasserstoffs durch Schmierstoffe erheblich reduziert.

In einer bevorzugten Ausführungsform des erfindungsgemässen Gasverdichtungssystems weisen die hydridbildenden Metalllegierungen der Metallhydridspeicher bei einer Temperatur von 60-100 °C einen Dissoziationsdruck von mindestens 30 bar, vorzugsweise mindestens 35 bar, und besonders bevorzugt mindestens 40 bar auf. Die Messung des Dissoziationsdrucks ist dem Fachmann aus dem Stand der Technik bekannt, beispielsweise aus der Veröffentlichung von T. Matsunaga et al. "TiCrVMo alloys with high dissociation pressure for high-pressure MH tank", International Journal of Hydrogen Energy, Vol. 34 (2009), 1458-1462, auf die hier Bezug genommen wird (siehe dort Abschnitt 2, "Experimental").

Bezüglich der einsetzbaren Legierungssysteme existieren zahlreiche hydrierbare Metalllegierungen, die jeweils eine ganz spezielle Druck-Temperatur-Charakteristik zeigen und sich daher für bestimmte Anwendungen besonders gut eignen, wobei die Legierungszusammensetzung massgeblich die Lage der Druckplateaus bei einer definierten Anwendungstemperatur beeinflusst. Eine Übersicht über gängige Metallhydride und ihre Eigenschaften findet sich in B. Sakintuna et al. "Metal hydride materials for solid hydrogen storage: A review", International Journal of Hydrogen Energy, Vol. 32 (2007), 1121-1140 , auf die hier Bezug genommen wird.

In einer bevorzugten Ausführungsform des erfindungsgemässen Gasverdichtungssystems sind die hydridbildenden Metalllegierungen ausgewählt aus der Gruppe umfassend LaNi₅, ZrV₂, ZrMn₂, TiMn₂, FeTi, Zr₂Co und Ti₂Ni. Bevorzugt sind die hydridbildenden Metalllegierungen ausgewählt aus der Gruppe umfassend LaNi₅, ZrV₂, ZrMn₂ und TiMn₂.

Die vorstehend genannten Metalllegierungen weisen den Vorteil auf, dass sich damit, insbesondere durch Kombination zweier oder mehrerer der vorstehend genannten Metalllegierungen, ein grosser Arbeitsdruckbereich, welcher durch die Differenz zwischen dem Leckgasdruck (p_{L}) und dem Saugdruck (pₛ) definiert wird, legierungstechnisch einstellen lässt.

In einer bevorzugten Ausführungsform des erfindungsgemässen Gasverdichtungssystems weist der Verdichter ein Gehäuse auf, welches im Wesentlichen nur bis 40 bar druckfest ausgebildet ist. Vorzugsweise ist das Gehäuse des Verdichters nur bis 15 bar, und besonders bevorzugt nur bis 2 bar, druckfest ausgebildet. Ein solches Gehäuse ist konstruktiv besonders einfach und kostengünstig herstellbar.

In einer bevorzugten Ausführungsform weist das erfindungsgemässe Gasverdichtungssystem stromabwärts der wenigstens einen Rückgewinnungseinrichtung und vor der Rückführung des Leckgases in die Stelle im Gasverdichtungssystem vor dem Verdichter keine Behälter zur Speicherung des Leckgases auf. Anders ausgedrückt ist das Gasverdichtungssystem stromabwärts der wenigstens einen Rückgewinnungseinrichtung und vor der Rückführung des Leckgases in die Stelle im Gasverdichtungssystem vor dem Verdichter und/oder in die Saugleitung der Verdichterstufe frei von Behältern zur Speicherung des Leckgases. Alternativ oder zusätzlich dazu ist es auch denkbar, dass das Gasverdichtungssystem zwischen dem Verdichter und der wenigstens einen Rückgewinnungseinrichtung frei von Behältern zur Speicherung des Leckgases ist. Im letztgenannten Fall weist das Gasverdichtungssystem somit - mit Ausnahme der Wasserstoffquelle des Verdichters - keine Behälter zur Speicherung des Leckgases auf.

Es versteht sich, dass die den Begriff "Leitung" enthaltenden Elemente der vorliegenden Erfindung, d.h. die der fluidischen Verbindung der Einrichtungen des Gasverdichtungssystems dienenden Elemente, nicht als "Behälter" im Sinne der vorliegenden Erfindung anzusehen sind.

Dadurch lässt sich das Gasverdichtungssystem mit weniger Einrichtungen kompakter und platzsparender ausgestalten.

Die Wärmezufuhr und Wärmeabfuhr zu bzw. von den Metallhydridspeichern durch die jeweiligen Wärmetauscher wird dadurch erreicht, dass die Metallhydridspeicher mit einem Wärmeträgermedium umgeben sind, welches nach aussen hin sehr gut wärmeisoliert ist. Die bei der Einspeicherung des Wasserstoffgases freigesetzte Wärme wird an das Wärmeträgermedium abgegeben und heizt dieses ebenso wie den Metallhydridspeicher selbst auf. Das Volumen des Wärmeträgermediums ist dabei so dimensioniert, dass bei vollständiger Beladung des Metallhydridspeichers die freigesetzte Wärme vollständig vom Wärmeträgermedium aufgenommen werden kann. Alternativ oder zusätzlich dazu ist es auch denkbar, dass das Wärmeträgermedium der jeweiligen Wärmetauscher durch eine geeignete Fördereinrichtung, beispielsweise eine Pumpe, periodisch oder kontinuierlich ausgetauscht wird. Der bei der Beladung der Metallhydridspeicher mit Wasserstoff erhaltene Temperaturanstieg richtet sich nach dem Beladedruck und der Wahl der hydridbildenden Metalllegierung.

In einer bevorzugten Ausführungsform des erfindungsgemässen Gasverdichtungssystems enthalten die jeweiligen Wärmetauscher als Wärmeträgermedium eine Flüssigkeit mit einer Siedetemperatur bei Normaldruck zwischen 30 °C und 180 °C. Bevorzugt beträgt die Siedetemperatur der als Wärmeträgermedium eingesetzten Flüssigkeit bei Normaldruck zwischen 90 °C und 130°C. Als besonders gut geeignete Wärmeträgermedien haben sich insbesondere Wasser, Wasser-Glykol-Gemische oder Thermoöle herausgestellt, da diese allgemeinhin gut verfügbar und sicher handhabbar sind.

Für die allgemeine Anwendung von Metallhydridspeichern benötigt man, wie eingangs beschrieben, ein Heizsystem, welchen den Metallhydridspeicher zu seiner Entladung beheizt. Zur Heizung des Metallhydridspeichers wird bislang zumeist auf elektrische Energie oder fossile Brennstoffe zurückgegriffen.

In einer bevorzugten Ausführungsform des erfindungsgemässen Gasverdichtungssystems ist dem Verdichter ein mit Kühlwasser kühlbarer Gaskühler zur Kühlung des vom Verdichter verdichteten Wasserstoffgases nachgeschaltet. Der Gaskühler und die Wärmetauscher der jeweiligen Rückgewinnungseinrichtungen sind dabei derart miteinander verbunden, dass das bei der Kühlung des Gaskühlers erwärmte Kühlwasser zumindest teilweise zur Wärmezufuhr für die jeweiligen Metallhydridspeicher nutzbar ist.

Durch die Nutzung von kaltem Kühlwasser bzw. Kühlwasser, welches durch einen Gaskühler erwärmt wurde, wird ermöglicht, dass zum Betrieb der Metallhydridspeicher keine oder nur noch sehr geringe Mengen an Heizenergie von aussen zugeführt werden müssen. Somit entfällt auch ein elektrischer Kraftanschluss für die Beheizung. Der Gesamtenergieaufwand zur Erhöhung des Leckgasdrucks geht nahezu gegen null, wenn man vom Stromverbrauch für Steuerung und Regelung absieht. Die Verwendung von kaltem bzw. erwärmtem Kühlwasser für die Kühlung bzw. Erwärmung der Metallhydridspeicher anstelle von elektrischer Energie erhöht nicht nur die Gesamteffizienz des industriellen Prozesses, sondern trägt indirekt auch zu einer Verringerung der Treibhausgase und anderer schädlicher Emissionen bei, die bei der Stromerzeugung in Wärmekraftwerken mit fossilen Brennstoffen als Nebenprodukt entstehen.

In einer bevorzugten Ausführungsform des erfindungsgemässen Gasverdichtungssystems weist die Leckgasabführleitung ein Überdruckventil auf. Bevorzugt öffnet das Überdruckventil bei einem Druck von mehr als 2 bar.

Das Vorsehen eines Überdruckventils in der Leckgasabführleitung dient der Erhöhung der Betriebssicherheit, da sich somit Wasserstoff, welcher beispielsweise aufgrund eines geschlossenen Ventils nicht von einer Rückgewinnungseinrichtung aufgenommen werden kann, nicht über die Belastungsgrenze der Leckgasabführleitung in dieser ansammeln kann.

In einer bevorzugten Ausführungsform des erfindungsgemässen Gasverdichtungssystems weist jeder Metallhydridspeicher jeweils zumindest ein Kombiventil oder ein Ventilpaar bestehend aus einem dem jeweiligen Metallhydridspeicher in Strömungsrichtung vorgelagerten Einlassventil und einem dem jeweiligen Metallhydridspeicher in Strömungsrichtung nachgelagerten Auslassventil zur Be- und/oder Entladung des jeweiligen Metallhydridspeichers mit Leckgas auf.

Die Verwendung eines Kombiventils zur Be- bzw. Entladung des jeweiligen Metallhydridspeichers mit Leckgas weist den Vorteil auf, dass sich dadurch die Anzahl an benötigten Bauteilen reduzieren lässt. Die Verwendung von Ventilpaaren aus Ein- und Auslassventilen, welche dem jeweiligen Metallhydridspeicher vor- bzw. nachgelagert angeordnet sind, weist den Vorteil auf, dass dadurch die Strömungsrichtung des Leckgases in der wenigstens einen Rückgewinnungseinrichtung beibehalten werden kann und die Druckerhöhung innerhalb der Rückgewinnungseinrichtungen effizienter gestaltet werden kann, wie nachfolgend noch näher erläutert wird.

Es ist denkbar, dass im Falle mehrerer in Strömungsrichtung in Reihe geschalteter Metallhydridspeicher das Auslassventil eines in Strömungsrichtung zuerst angeordneten Metallhydridspeichers gleichermassen das Einlassventil eines zu diesem Metallhydridspeicher benachbarten, in Strömungsrichtung nachfolgend angeordneten Metallhydridspeichers darstellt. Dadurch kann die Gesamtzahl an erforderlichen Ventilen deutlich reduziert werden und der konstruktive Aufwand des Gasverdichtungssystems weiter verringert werden.

In einer bevorzugten Ausführungsform des Gasverdichtungssystems umfassend Kombiventile und/oder Ventilpaare wie vorgehend beschrieben, weist das Gasverdichtungssystem ferner eine Ansteuereinrichtung zur Ansteuerung der Kombiventile oder der Ein- und Auslassventile auf. Im Fall des Vorliegens von Ein- und Auslassventilen sind diese durch die Ansteuereinrichtung derart angesteuert, dass im betriebsgemässen Einsatz bei jedem in Strömungsrichtung benachbarten Ventilpaar zumindest eines der benachbarten Ventile geschlossen ist, um eine durchgehende, Fluid leitende Verbindung zwischen der Leckgasabführleitung und der Leckgasrückführleitung auszuschliessen.

In einer bevorzugten Ausführungsform des erfindungsgemässen Gasverdichtungssystems ist zwischen den Metallhydridspeichern der jeweiligen Rückgewinnungseinrichtung wenigstens ein entgegen der Strömungsrichtung schliessendes Rückschlagorgan angeordnet. Zusätzlich oder alternativ dazu ist in der Leckgasabführleitung wenigstens ein entgegen der Strömungsrichtung schliessendes Rückschlagorgan angeordnet. Zusätzlich oder alternativ dazu ist in der Leckgasrückführleitung wenigstens ein entgegen der Strömungsrichtung schliessendes Rückschlagorgan angeordnet.

Durch das Ausschliessen einer Fluid leitenden Verbindung zwischen der Leckgasabführleitung und der Leckgasrückführleitung durch eine Ansteuereinrichtung und/oder die Anordnung der beschriebenen Rückschlagorgane kann ein Rückschlag von Leckgas entgegen der Strömungsrichtung aufgrund von Druckunterschieden zwischen den einzelnen Metallhydridspeichern ausgeschlossen werden, wodurch die Gefahr einer Überbelastung und Beschädigung von Bauteilen deutlich reduziert wird.

Eine bevorzugte Ausführungsform des erfindungsgemässen Gasverdichtungssystems umfasst ferner eine Vorreinigungseinrichtung zur Vorreinigung des Wasserstoffleckgases, bevor dieses den Metallhydridspeichern zugeleitet wird. In einer solchen Vorreinigungseinrichtung werden bereits die Verunreinigungen, die sich nachteilig auf die Lebensdauer der hydridbildenden Metalllegierungen auswirken können, ausgefiltert, umgewandelt und/oder absorbiert. Für diesen Zweck enthält die Vorreinigungseinrichtung einen Fangstoff (Gettermaterial), wobei sich insbesondere hydridbildende Metalle bzw. Legierungen, bei denen die Hydridbildung erst deutlich oberhalb des Höchstdrucks der nachgelagerten Rückgewinnungseinrichtung einsetzt. Somit erfolgt während der Vorreinigung keine Hydridbildung am Gettermaterial. Stattdessen werden aber andere Bestandteile des Wasserstoffleckgases vom Gettermaterial chemisorbiert und können somit nicht mehr zu einer Verunreinigung oder gar Beschädigung der eigentlichen hydridbildenden Metalllegierungen der Metallhydridspeicher führen. Damit ist ein langfristiger und zuverlässiger Betrieb der Metallhydridspeicher der Rückgewinnungseinrichtungen gewährleistet.

Vorzugsweise ist die Vorreinigungseinrichtung zur Vorreinigung des Wasserstoffleckgases in der Leckgasabführleitung angeordnet, und zwar vor etwaigen Verzweigungen, welche zu den einzelnen Rückgewinnungseinrichtungen führen, sodass das Gasverdichtungssystem lediglich eine einzige Vorreinigungseinrichtung umfassen kann. Da das Gettermaterial in Abhängigkeit von der Qualität des Leckgases und dem geforderten Reinheitsgrad des durch die Vorreinigungseinrichtung gereinigten Leckgases von Zeit zu Zeit gegen frisches Material ausgewechselt werden muss, lässt sich der hierzu benötigte Aufwand bei einer einzigen zu wartenden Vorreinigungseinrichtung reduzieren. Alternativ oder zusätzlich dazu ist es jedoch auch denkbar, dass jeder Rückgewinnungseinrichtung eine Vorreinigungseinrichtung zugeordnet ist, wodurch die Flexibilität beim Betrieb und bei der Wartung des Gasverdichtungssystems erhöht wird.

Die Aufgabe wird weiter mit einem Verfahren zur Rückgewinnung von Wasserstoff, welcher bei einem Verdichter als Leckgas anfällt, gelöst. Das erfindungsgemässe Verfahren umfasst dabei das Einleiten des Leckgases in eine Rückgewinnungseinrichtung mit zumindest einem Metallhydridspeicher mit wenigstens einer hydridbildenden Metalllegierung (Schritt a); die Beladung des Metallhydridspeichers unter Absorption des eingeleiteten Leckgases durch die Metalllegierung unter Bildung eines Metallhydrids (Schritt b); das Abführen der bei der Bildung des Metallhydrids freiwerdenden Wärme durch einen Wärmetauscher, welcher mit dem Metallhydridspeicher wärmegekoppelt ist (Schritt c); das Aufheizen des gebildeten Metallhydrids auf eine vorbestimmte Temperatur durch den Wärmetauscher unter Desorption von zumindest einem Teil des zuvor absorbierten Leckgases (Schritt d); die Entladung des Metallhydridspeichers und Abgabe des desorbierten Leckgases aus der Rückgewinnungseinrichtung an eine Leckgasrückführleitung und in eine Stelle im Gasverdichtungssystem vor dem Verdichter und/oder in die Saugleitung einer Verdichterstufe des Verdichters, aus welchem das Leckgas stammt (Schritt e). Schritt e) kann optional unter weiterem Aufheizen des gebildeten Metallhydrids durch den Wärmetauscher erfolgen. Der Druck des Leckgases wird dabei in Schritt d) - und bei Fortsetzung des Aufheizens des gebildeten Metallhydrids gegebenenfalls auch in Schritt e) - durch den wenigstens einen Metallhydridspeicher der Rückgewinnungseinrichtung von dem in der Leckgasabführleitung herrschenden Leckgasdruck (p_{L}) auf wenigstens den in der Stelle des Gasverdichtungssystems herrschenden Druck (p) und/oder wenigstens den in der Saugleitung der Verdichterstufe herrschenden Saugdruck (pₛ) erhöht. Der Druckerhöhung innerhalb der Rückgewinnungseinrichtung wird dabei durch entsprechende Steuerung von Ein- und Auslassventilen, welche dem Metallhydridspeicher in Strömungsrichtung vor- bzw. nachgelagert angeordnet sind, erreicht, wie nachfolgend noch näher beschrieben wird.

Vorzugsweise wird das hierin beschriebene, erfindungsgemässe Verfahren zur Rückgewinnung von Wasserstoff mit einem erfindungsgemässen Gasverdichtungssystem wie hierin beschrieben durchgeführt.

In einer bevorzugten Ausführungsform des erfindungsgemässen Verfahrens erfolgt die Druckerhöhung des Leckgases vom Leckgasdruck (*p*_{L}) auf den Saugdruck (*p*ₛ) mehrstufig unter Verwendung einer Mehrzahl von in der Rückgewinnungseinrichtung in Strömungsrichtung miteinander in Reihe geschalteter Metallhydridspeicher. In diesem Fall erhöht der in der Rückgewinnungseinrichtung in Strömungsrichtung zuerst angeordnete, erste Metallhydridspeicher den Druck des Leckgases vom Leckgasdruck (*p*_{L}) auf einen im Vergleich zum Leckgasdruck (*p*_{L}) höheren ersten Zwischendruck (*p*₁). Der in der Rückgewinnungseinrichtung in Strömungsrichtung zuletzt angeordnete, letzte Metallhydridspeicher erhöht den Druck des Leckgases auf den Saugdruck (*p*ₛ). Gegebenenfalls zwischen dem ersten Metallhydridspeicher und dem letzten Metallhydridspeicher angeordnete Metallhydridspeicher erhöhen den Druck des Leckgases stufenweise auf einen im Vergleich zum ersten Zwischendruck (*p*₁) höheren Zwischendruck (*p*₂, *p*₃ ... *p*ₙ).

In einer bevorzugten Ausführungsform des erfindungsgemässen Verfahrens wird das Verfahren kontinuierlich unter zyklischer Be- und Entladung zweier in Strömungsrichtung parallel angeordneter Rückgewinnungseinrichtungen durchgeführt. Jede Rückgewinnungseinrichtung umfasst dabei zumindest einen Metallhydridspeicher.

In einer weiteren bevorzugten Ausführungsform des erfindungsgemässen Verfahrens erfolgt das Aufheizen des gebildeten Metallhydrids in Schritt d) zumindest teilweise mit Wasser, welches aus der Kühlung eines dem Verdichter nachgeschalteten Gaskühlers erhalten wird.

In einer bevorzugten Ausführungsform des erfindungsgemässen Verfahrens erfolgt die Be- und Entladung jedes Metallhydridspeichers über zumindest ein Kombiventil oder ein Ventilpaar bestehend aus einem dem jeweiligen Metallhydridspeicher in Strömungsrichtung vorgelagerten Einlassventil und einem dem jeweiligen Metallhydridspeicher in Strömungsrichtung nachgelagerten Auslassventil. In dem zuletzt genannten Fall werden die jeweiligen Ein- und Auslassventile durch eine Ansteuereinrichtung derart angesteuert, dass eine durchgehende, Fluid leitende Verbindung zwischen der Leckgasabführleitung und der Leckgasrückführleitung ausgeschlossen wird.

Die Vorteile, welche sich bei der Durchführung der hierin beschriebenen Verfahren ergeben, entsprechen im Wesentlichen den bereits zu den jeweiligen Ausführungsformen des erfindungsgemässen Gasverdichtungssystems dargelegten Vorteilen.

Die Aufgabe wird ferner durch eine Wasserstofftankstelle umfassend ein Gasverdichtungssystem wie hierin beschrieben gelöst, welche bevorzugt mit einem der hierin beschriebenen Verfahren betrieben wird.

Verschiedene Ausführungsformen der Erfindung werden nachfolgend anhand von Zeichnungen beschrieben, wobei gleiche oder entsprechende Elemente grundsätzlich mit gleichen Bezugszeichen versehen sind. Es zeigen:
- Fig. 1: Fliessschema zeigend ein erfindungsgemässes Gasverdichtungssystem;
- Fig. 2: Schematische Darstellung eines Metallhydridspeichers zur Verwendung in einem erfindungsgemässen Gasverdichtungssystem im Querschnitt;
- Fig. 3: Fliessschema zeigend eine weitere Ausführungsform eines erfindungsgemässen Gasverdichtungssystems mit zwei parallel geschalteten Rückgewinnungseinrichtungen;
- Fig. 4a: Fliessschema zeigend ein erfindungsgemässes Gasverdichtungssystem in einem Beladungsschritt;
- Fig. 4b: Fliessschema zeigend das Gasverdichtungssystem aus Fig. 4a in einem Entladungsschritt;
- Fig. 5a: Fliessschema zeigend eine weitere Ausführungsform eines erfindungsgemässen Gasverdichtungssystems mit parallel geschalteten Rückgewinnungseinrichtungen in einem Bebzw. einem Entladungsschritt;
- Fig. 5b: Fliessschema zeigend das Gasverdichtungssystem aus Fig. 5a in einem Ent- bzw. Beladungsschritt.

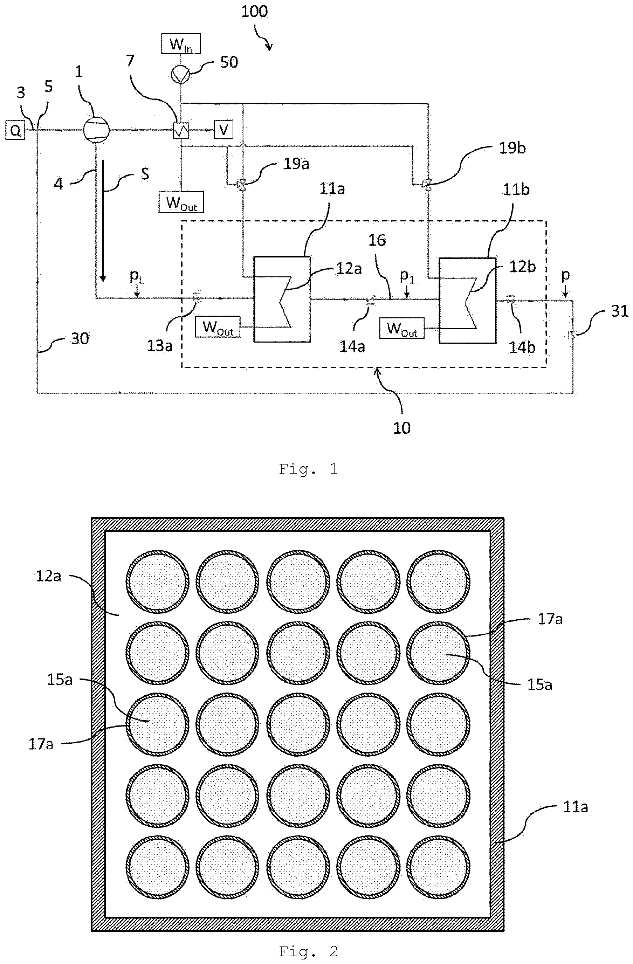

Figur 1 zeigt ein Fliessschema eines erfindungsgemässen Gasverdichtungssystems 100 mit einem Verdichter 1 für Wasserstoff. Der Verdichter 1 ist über eine Leitung 3 fluidisch mit einer Wasserstoffquelle Q verbindbar, sodass dem Verdichter 1 der zu verdichtende Wasserstoff über die Leitung 3 zuführbar ist. Das Gasverdichtungssystem 100 umfasst ferner eine nachfolgend noch näher beschriebene Rückgewinnungseinrichtung 10 zur Rückgewinnung von Wasserstoff, welcher beim Verdichten als Leckgas aus dem Verdichter 1 austritt. Zur Abführung des Leckgases vom Verdichter ist eine Leckgasabführleitung 4 vorhanden, welche fluidisch mit dem Verdichter und dem bei der Verdichtung anfallenden Leckgasstrom verbindbar ist. Das Gasverdichtungssystem 100 weist ferner eine Leckgasrückführleitung 30 zur Rückführung des durch die Rückgewinnungseinrichtung 10 zurückgewonnenen Leckgases in eine Stelle 5 im Gasverdichtungssystem 100 auf, welche vor dem Verdichter 1 liegt, welchem das Leckgas entstammt. In der in Figur 1 gezeigten Ausführungsform wird das durch die Rückgewinnungseinrichtung 10 zurückgewonnene Leckgas an der mit dem Bezugszeichen 5 versehenen Stelle in die Leitung 3 eingeleitet, welche die Wasserstoffquelle Q mit dem Verdichter 1 fluidisch verbindet. Die Leckgasrückführleitung 30 weist dabei ein Rückschlagorgan 31 auf, welches entgegen die Strömungsrichtung S schliesst. In der dargestellten Ausführungsform umfasst die Rückgewinnungseinrichtung zwei Metallhydridspeicher 11a, 11b, welche jeweils eine hydridbildende Metalllegierung enthalten und jeweils mit einem Wärmetauscher 12a, 12b wärmegekoppelt sind. Kaltes Kühlwasser, welches dem Gasverdichtungssystem 100 von einer Kühlwasserquelle W_{In} über eine Kühlwasserpumpe 50 bereitstellbar ist, kann zur Kühlung der beiden Metallhydridspeicher 11a, 11b verwendet werden. Zur Erwärmung der beiden Metallhydridspeicher 11a, 11b kann vorgängig erwärmtes Kühlwasser, d.h. Kühlwasser, welches im Zuge der Kühlung des durch den Verdichter 1 verdichteten Wasserstoffs durch einen Gaskühler 7 erhalten wird, verwendet werden. Das kalte bzw. das erwärmte Kühlwasser kann den beiden Metallhydridspeichern 11a, 11b über Dreiwegearmaturen 19a, 19b zugeführt werden. Nicht genutztes oder verbrauchtes Kühlwasser wird Kühlwasserabflüssen Wₒᵤₜ zugeführt und vorzugsweise rezykliert. Die Rückgewinnungseinrichtung 10 ist mit der Leckgasabführleitung 4 über das Einlassventil 13a des ersten Metallhydridspeichers 11a und mit der Leckgasrückführleitung 30 über das Auslassventil 14b des zweiten Metallhydridspeichers 11b fluidisch verbindbar. Die beiden Metallhydridspeicher 11a, 11b sind über eine Verbindungsleitung 16 und ein in der Verbindungsleitung 16 angeordnetes Ventil 14a fluidisch miteinander verbindbar und, in Strömungsrichtung S des Leckgasstroms gesehen, in Reihe geschaltet. Der in Strömungsrichtung S zuerst angeordnete Metallhydridspeicher 11a ist dabei zur Erhöhung des in der Leckgasabführleitung 4 herrschenden Leckgasdrucks p_{L}, welcher beispielsweise 2 bar beträgt, auf einen im Vergleich zum Leckgasdruck p_{L} höheren ersten Zwischendruck p₁, welcher beispielsweise 15 bar beträgt, ausgebildet. Der in Strömungsrichtung S zuletzt angeordnete Metallhydridspeicher 11b der Rückgewinnungseinrichtung 10 ist zur Erhöhung des ersten Zwischendrucks p₁, welcher durch den ihm vorgelagerten Metallhydridspeicher 11a bereitgestellt wird, auf den in der Leitung 3 herrschenden druck p, welcher beispielsweise 30 bar beträgt, ausgebildet. Das somit rückgewonnene, d.h. vom Leckgasdruck p_{L} auf den Druck p angehobene, Leckgas wird erneut dem Verdichter 1 zugeführt und letztlich an einen Verbraucher V, beispielsweise an ein Brennstoffzellenfahrzeug, abgegeben.

Figur 2 zeigt eine schematische Darstellung eines Metallhydridspeichers 11a zur Verwendung in einem erfindungsgemässen Gasverdichtungssystem im Querschnitt. Der Metallhydridspeicher 11a umfasst in dem dargestellten Ausführungsbeispiel insgesamt fünfundzwanzig rohrförmige Behälter 17a (in Figur 2 im Querschnitt gezeigt), welche mit einer hydridbildenden Metalllegierung 15a gefüllt sind. Die Behälter 17a sind zur Ein- und Ausleitung von Wasserstoffleckgas in die Behälter 17a ausgebildet, wobei im Falle von rohrförmigen Behältern 17a die Ein- und Ausgänge vorzugsweise an den entgegengesetzten Rohrenden angeordnet sind. Die die hydridbildende Metalllegierung 15a enthaltenden Behälter 17a sind von einem Wärmeträgermedium, insbesondere Wasser oder einem Thermoöl, umgeben, sodass die Metalllegierung 15a unter Wärmezufuhr bzw. Wärmeabfuhr durch den Wärmetauscher 12a Leckgas desorbieren bzw. adsorbieren kann. Zur Verbesserung der Wärmleitung zwischen dem Wärmeträgermedium und der Behälterwandung können an der Aussenoberfläche der Behälter 17a Rippen aus gut wärmeleitendem Material zur Oberflächenvergrösserung angeordnet sein, welche in das Wärmeträgermedium eintauchen (nicht gezeigt) .

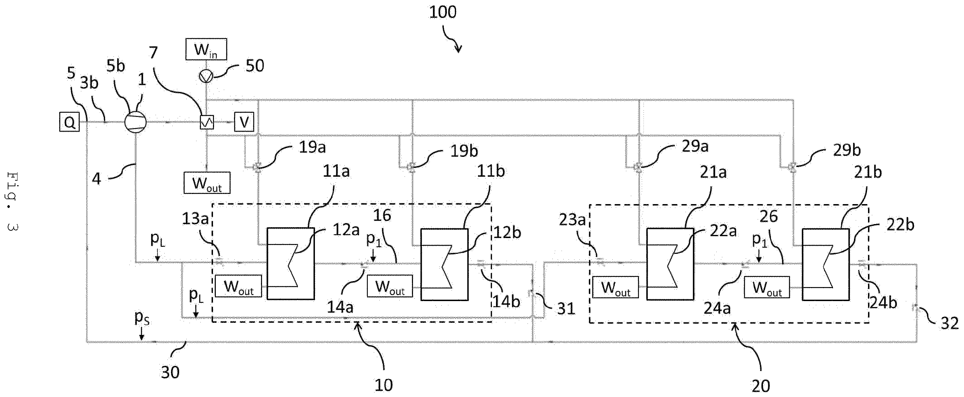

Figur 3 zeigt ein Fliessschema einer weiteren Ausführungsform eines erfindungsgemässen Gasverdichtungssystems 100, welches zwei parallel geschaltete Rückgewinnungseinrichtungen 10, 20 zur Rückgewinnung von Wasserstoff, welcher aus einem Verdichter 1 als Leckgas austritt, umfasst. Die erste Rückgewinnungseinrichtung 10 umfasst dabei die zwei in Reihe geschalteten Metallhydridspeicher 11a und 11b, die zweite Rückgewinnungseinrichtung 20 die beiden in Reihe geschalteten Metallhydridspeicher 21a und 21b. Der in Strömungsrichtung S zuerst angeordnete Metallhydridspeicher 11a der ersten Rückgewinnungseinrichtung 10 ist über Verbindungsleitung 16 und das darin angeordnete Ventil 14a mit dem in Strömungsrichtung S nachgelagerten Metallhydridspeicher 11b fluidisch verbindbar. Analog dazu ist der in Strömungsrichtung S zuerst angeordnete Metallhydridspeicher 21a der zweiten Rückgewinnungseinrichtung 20 über Verbindungsleitung 26 und das darin angeordnete Ventil 24a mit dem in Strömungsrichtung S nachgelagerten Metallhydridspeicher 21b fluidisch verbindbar. Wasserstoffleckgas, welches bei der Verdichtung durch den Verdichter 1 des Gasverdichtungssystems 100 anfällt, wird durch eine Leckgasabführleitung 4 vom Verdichter 1 abgeführt und über das Einlassventil 13a oder über das Einlassventil 23a, welche Einlassventile 13a, 23a die erste Rückgewinnungseinrichtung 10 bzw. die zweite Rückgewinnungseinrichtung 20 mit der Leckgasabführleitung 4 fluidisch verbinden, zeitlich abwechselnd den jeweiligen Metallhydridspeichern 11a, 21a zugeführt, d.h. die parallel angeordneten Rückgewinnungseinrichtungen 10, 20 arbeiten im Gegentakt. Innerhalb jeder Rückgewinnungseinrichtung 10, 20 erfolgt die Druckerhöhung des Leckgases vom in der Leckgasabführleitung herrschenden Leckgasdruck p_{L} über einen ersten Zwischendruck p₁ auf den in der Saugleitung 3b der ersten Verdichterstufe 5b des Verdichters 1 herrschenden Saugdruck pₛ, im Wesentlichen wie vorgängig zu Figur 1 beschrieben. Die Metallhydridspeicher 11a, 11b, 21a, 21b sind hierzu jeweils mit einem Wärmetauscher 12a, 12b, 22a, 22b wärmegekoppelt, wobei das zur Kühlung oder Erwärmung der Metallhydridspeicher verwendete Wasser den Wärmetauschern 12a, 12b, 22a, 22b von einer Kühlwasserquelle W_{In} mit Kühlwasserpumpt 50 bzw. nach vorheriger Erwärmung durch einen Gaskühler 7 über Dreiwegearmaturen 19a, 19b, 29a, 29b zuführbar ist. Nicht genutztes oder verbrauchtes Kühlwasser wird Kühlwasserabflüssen W_{Out} zugeführt und vorzugsweise rezykliert. Die erste Rückgewinnungseinrichtung 10 und die zweite Rückgewinnungseinrichtung 20 sind über die Auslassventile 14b bzw. 24b der in den jeweiligen Rückgewinnungseinrichtungen 10, 20 in Strömungsrichtung S zuletzt angeordneten Metallhydridspeicher 11b, 21b fluidisch mit einer Leckgasrückführleitung 30 verbindbar, wobei jeder Rückgewinnungseinrichtung 10, 20 in Strömungsrichtung S ein Rückschlagorgan 31, 32 nachgelagert ist. Über die Leckgasrückführleitung 30 wird das zuvor rückgewonnene und auf den Saugdruck pₛ erhöhte Leckgas an der mit dem Bezugszeichen 5 bezeichneten Stelle der Saugleitung 3b der ersten Verdichterstufe 5b des Verdichters 1 eingespeist.

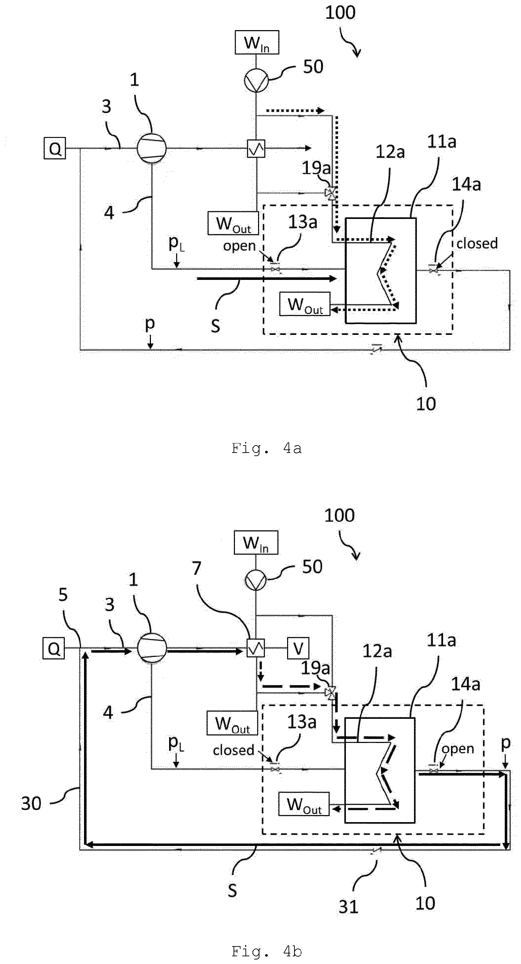

Figur 4a zeigt ein Fliessschema eines erfindungsgemässen Gasverdichtungssystems 100 umfassend eine einzige Rückgewinnungseinrichtung 10 zum Zeitpunkt der Beladung des einzigen darin enthaltenen Metallhydridspeichers 11a. Ein Teil des Wasserstoffs, welcher dem Verdichter 1 über eine Leitung 3 von einer Wasserstoffquelle Q bereitgestellt wird, fällt bei der Verdichtung als Leckgasstrom an, welcher über eine Leckgasabführleitung 4 vom Verdichter abgeführt und über das Einlassventil 13a in den Metallhydridspeicher 11a der Rückgewinnungseinrichtung 10 eingeleitet wird. Zur Beladung des Metallhydridspeichers 11a mit Leckgas und Bildung eines Metallhydrids wird das dem Metallhydridspeicher 11a in Strömungsrichtung S des Leckgases vorgelagerte Einlassventil 13a geöffnet und das dem Metallhydridspeicher 11a in Strömungsrichtung S des Leckgasstroms nachgelagerte Auslassventil 14a geschlossen, wie in Figur 4a angegeben. Die bei der Bildung des Metallhydrids freiwerdende Wärme wird durch einen Wärmetauscher 12a, welcher mit dem Metallhydridspeicher 11a wärmegekoppelt ist, abgeführt, wobei zu diesem Zweck kaltes Kühlwasser aus einer Kühlwasserquelle W_{In} über eine Kühlwasserpumpe 50 und eine Dreiwegearmatur 19a, welche die Kühlwasserquelle fluidisch mit dem Wärmetauscher 12a verbindet, verwendet wird (siehe gepunktete Pfeile in Figur 4a zur Verdeutlichung des Kaltwasserflusses) . Das verbrauchte Kühlwasser, welches im Wärmetauscher 12a bei der Kühlung der hydridbildenden Metalllegierung erwärmt wurde, wird einem Kühlwasserablauf W_{Out} zugeführt. Nach Abschluss der Beladung des Metallhydridspeichers 11a mit Leckgas wird das dem Metallhydridspeicher 11a in Strömungsrichtung S vorgelagerte Einlassventil 13a geschlossen (nicht gezeigt) .

Figur 4b zeigt ein Fliessschema des Gasverdichtungssystems 100 aus Figur 4a bei der Entladung des Metallhydridspeichers 11a der Rückgewinnungseinrichtung 10. Der Metallhydridspeicher 11a wurde vorgängig zur Desorption von zumindest einem Teil des zuvor absorbierten Leckgases bei geschlossenen Ein- und Auslassventilen 13a, 14a durch den Wärmetauscher 12a auf eine vorbestimmte Temperatur aufgeheizt, wobei ein in der Leckgasabführleitung vorhandenes Überdruckventil fortwährend aus dem Verdichter 1 anfallendes Leckgas bei Überschreitung eines vorbestimmten Leckgasdrucks aus der Leckgasabführleitung ablässt (nicht gezeigt). Nachdem der Druck im Inneren des Metallhydridspeichers 11a auf den in der Leitung 3 herrschenden Druck p erhöht wurde, wird das in Strömungsrichtung S des Leckgases nachgelagerte Auslassventil 14a des Metallhydridspeichers 11 geöffnet und der Metallhydridspeicher 11a unter weiterer Wärmezufuhr durch den Wärmetauscher 12a entladen. Im vorliegenden Ausführungsbeispiel wird zu diesem Zweck Wasser der Kühlwasserquelle W_{In} verwendet, welches durch die Kühlwasserpumpe 50 einem Gaskühler 7 zugeführt wurde und durch diesen erwärmt wurde (siehe gestrichelte Pfeile in Figur 4b zur Verdeutlichung des Warmwasserflusses). Die verwendete Dreiwegearmatur 19a, durch welche der Wärmetauscher 12a sowohl mit der Kühlwasserquelle W_{In} als auch mit dem Gaskühler 7 fluidisch verbindbar ist, kann dabei auch zur Mischung von kaltem Kühlwasser aus der Kühlwasserquelle W_{In} und vom Gaskühler 7 erwärmtem Kühlwasser genutzt werden, um so die Temperatur des Metallhydridspeichers 11a einzustellen. Das unter dem Druck p stehende, desorbierte Leckgas wird aus der Rückgewinnungseinrichtung 10 über Auslassventil 14a an eine Leckgasrückführleitung 30, welche ein in Strömungsrichtung S öffnendes Rückschlagorgan 31 umfasst, abgegeben und an einer mit dem Bezugszeichen 5 versehenen Stelle in die Leitung 3 eingeleitet. Das rückgewonnene Leckgas wird somit erneut dem Verdichter 1 zugeführt und letztlich an einen Verbraucher V abgegeben.

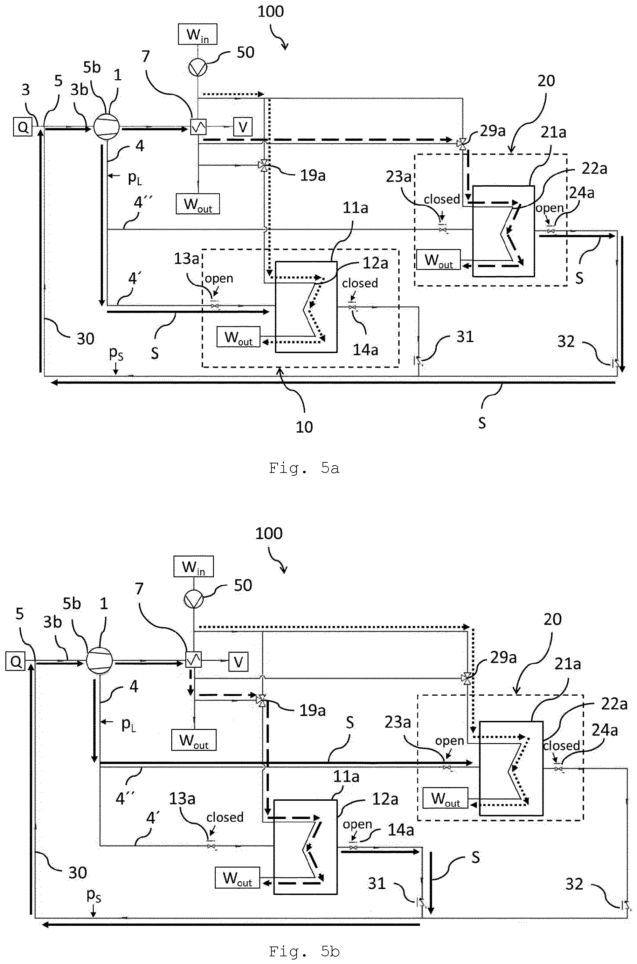

Figur 5a zeigt ein Fliessschema einer weiteren Ausführungsform eines erfindungsgemässen Gasverdichtungssystems 100 umfassend zwei parallel geschaltete Rückgewinnungseinrichtungen 10, 20 mit jeweils einem Metallhydridspeicher 11a, 21a. In Figur 5a befindet sich die erste Rückgewinnungseinrichtung 10 in einem Beladezyklus und die zweite Rückgewinnungseinrichtung 20 arbeitet im Gegentakt dazu in einem Entladezyklus. Anders ausgedrückt findet während der Beladung des Metallhydridspeichers 11a der ersten Rückgewinnungseinrichtung 10 die Entladung des Metallhydridspeichers 21a der zweiten Rückgewinnungseinrichtung 20 statt. Im Gegensatz zu dem in den Figuren 4a und 4b geschriebenen Verfahren lässt sich die Rückgewinnung von Leckgas, welches bei der Verdichtung von Wasserstoff in einem Verdichter 1 anfällt, mit dem zu den Figuren 5a und 5b beschriebenen Verfahren somit kontinuierlich bewerkstelligen. Aus diesem Grund kann grundsätzlich auf Überdruckventile in der Leckgasabführleitung 4, welche bei Überschreitung eines bestimmten darin herrschenden Leckgasdrucks p_{L} öffnen, verzichtet werden. Aus sicherheitstechnischen Gründen kann das Vorsehen derartiger Druckentlastungselemente zur Vermeidung von Druckspitzen und Beschädigungen in der Leckgasabführleitung 4 jedoch dennoch angezeigt sein. Bei der in den Figuren 5a und 5b dargestellten Ausführungsform eines erfindungsgemässen Gasverdichtungssystems 100 verzweigt sich die Leckgasabführleitung 4 in die beiden Leckgasabführleitungen 4' und 4", von denen die eine Leckgasabführleitung 4' fluidisch mit der ersten Rückgewinnungseinrichtung 10 verbindbar ist und die andere Leckgasabführleitung 4" mit der zweiten Rückgewinnungseinrichtung 20. Die Beladung des Metallhydridspeichers 11a der ersten Rückgewinnungseinrichtung 10 erfolgt dabei bei geöffnetem Einlassventil 13a und geschlossenem Auslassventil 14a, welche dem Metallhydridspeicher 11a in Strömungsrichtung S des Leckgases vor- bzw. nachgelagert angeordnet sind, und unter Wärmeabfuhr von der in dem Metallhydridspeicher enthaltenen hydridbildenden Metalllegierung durch einen Wärmetauscher 12a, welcher mit dem Metallhydridspeicher 11a wärmegekoppelt ist. Das zu diesem Zweck verwendete, kalte Kühlwasser wird von einer Kühlwasserquelle W_{In} über eine Kühlwasserpumpe 50 und eine Dreiwegearmatur 19a, welche die Kühlwasserquelle fluidisch mit dem Wärmetauscher 12a verbindet, bereitgestellt (siehe gepunktete Pfeile in Figur 5a zur Verdeutlichung des Kaltwasserflusses). Das verbrauchte Kühlwasser wird in einen Kühlwasserabfluss W_{Out} eingeleitet. Die Entladung des Metallhydridspeichers 21a der zweiten Rückgewinnungseinrichtung 20 erfolgt bei geschlossenem Einlassventil 23a und geöffnetem Auslassventil 24a sowie unter Erwärmung des Metallhydridspeichers 21a durch den ihm zugeordneten Wärmetauscher 22a. Der Wärmetauscher 22a wird dazu über die Dreiwegearmatur 29a mit der Kühlwasserquelle W_{In} fluidisch verbunden, wobei das erwärmte Kühlwasser durch einen Gaskühler 7 erhalten wird, welcher den vom Verdichter 1 verdichteten Wasserstoff vor der Abgabe an einen Verbraucher V kühlt (siehe gestrichelte Pfeile in Figur 5a zur Verdeutlichung des Warmwasserflusses). Das im Wärmetauscher 22a der zweiten Rückgewinnungseinrichtung 20 verbrauchte Kühlwasser wird ebenfalls in einen Kühlwasserabfluss W_{Out} eingeleitet und vorzugsweise rezykliert. Die erste Rückgewinnungseinrichtung 10 und die zweite Rückgewinnungseinrichtung 20 sind über die Auslassventile 14a bzw. 24a der in den jeweiligen Rückgewinnungseinrichtungen 10, 20 in Strömungsrichtung S zuletzt angeordneten Metallhydridspeicher 11a, 21a fluidisch mit einer Leckgasrückführleitung 30 verbindbar, wobei jeder Rückgewinnungseinrichtung 10, 20 in Strömungsrichtung S ein Rückschlagorgan 31, 32 nachgelagert ist. Das Leckgas, welches durch die zweite Rückgewinnungseinrichtung 20 vom Leckgasdruck p_{L} auf den Saugdruck pₛ verdichtet wurde, wird über die Leckgasrückführleitung 30 an der mit dem Bezugszeichen 5 bezeichneten Stelle der Saugleitung 3b der ersten Verdichterstufe 5b des Verdichters 1 eingespeist. Das Gasverdichtungssystem wird einschliesslich der vorgängig beschriebenen Ventile von einer nicht dargestellten freiprogrammierbaren Anlagenansteuereinrichtung überwacht und gesteuert.

Lediglich zur Verdeutlichung der gegengetakteten Arbeitsweise der beiden parallel geschalteten Rückgewinnungseinrichtungen 10, 20 zeigt Figur 5b ein Fliessschema des Gasverdichtungssystems 100 aus Figur 5a, wobei sich nun die erste Rückgewinnungseinrichtung 10 im Entladezyklus befindet und die zweite Rückgewinnungseinrichtung 20 im Beladezyklus. Der Warmwasserfluss im Gasverdichtungssystem 100 ist dabei unter Verwendung von gestrichelten Pfeilen dargestellt und der Kaltwasserfluss unter Verwendung von gepunkteten Pfeilen. Die Zuordnung der verwendeten Bezugszeichen und die Funktionsbeschreibung sämtlicher der in Figur 5b dargestellten Elemente ist der Beschreibung zu Figur 5a zu entnehmen.

## Patentansprüche

1. Gasverdichtungssystem (100) mit
- einem Verdichter (1) zum Verdichten von Wasserstoff;
- wenigstens einer Rückgewinnungseinrichtung (10) zur Rückgewinnung von Wasserstoff, welcher beim Verdichten als Leckgas aus dem Verdichter (1) austritt; sowie
- einer Leckgasrückführleitung (30), die dazu ausgelegt ist, das durch die wenigstens eine Rückgewinnungseinrichtung (10) zurückgewonnene Leckgas in eine Stelle (5) im Gasverdichtungssystem (100) vor dem Verdichter (1) und/oder in die Saugleitung (3a) einer Verdichterstufe (5a), insbesondere in die Saugleitung (3b) der ersten Verdichterstufe (5b), des Verdichters (1) zurückzuführen;
wobei der Verdichter (1) eine Leckgasabführleitung (4) zur Abführung des Leckgases von dem Verdichter (1) aufweist; und
wobei jede Rückgewinnungseinrichtung (10) mit der Leckgasabführleitung (4) und der Leckgasrückführleitung (30) flui-
disch verbindbar ist;
**dadurch gekennzeichnet, dass**
jede Rückgewinnungseinrichtung zumindest einen Metallhydridspeicher (11a) aufweist, der mit jeweils einem Wärmetauscher (12a) wärmegekoppelt ist;
wobei jeder Metallhydridspeicher (11a) wenigstens eine hydridbildende Metalllegierung (15a) aufweist, welche unter Wärmezu- bzw. -abfuhr durch den jeweiligen Wärmetauscher (12a) zur zyklischen De- bzw. Absorption von Leckgas ausgebildet ist; und
wobei jede Rückgewinnungseinrichtung (10) zur Erhöhung des in der Leckgasabführleitung (4) herrschenden Leckgasdrucks (*p*_{L}) auf wenigstens den in der Stelle (5) des Gasverdichtungssystems (100) herrschenden Druck (*p*) und/oder auf wenigstens den in der Saugleitung (3a) der Verdichterstufe (5a) herrschenden Saugdruck (*p*ₛ) ausgebildet ist.

2. Gasverdichtungssystem (100) nach Anspruch 1, umfassend eine erste Rückgewinnungseinrichtung (10) und eine zweite Rückgewinnungseinrichtung (20) für ein voneinander zeitlich unabhängiges Be- und Entladen der in den jeweiligen Rückgewinnungseinrichtungen (10, 20) angeordneten Metallhydridspeicher (11a, 21a).

3. Gasverdichtungssystem (100) nach Anspruch 1 oder 2,
wobei jede Rückgewinnungseinrichtung (10) eine Mehrzahl von Metallhydridspeichern, insbesondere zwei Metallhydridspeicher (11a, 11b), aufweist, welche in Strömungsrichtung (S) des Leckgasstroms gesehen miteinander in Reihe geschaltet sind und mit jeweils einem Wärmetauscher (12a, 12b) wärmegekoppelt sind;
wobei die in Reihe geschalteten Metallhydridspeicher (11a, 11b) jeweils wenigstens eine, bevorzugt voneinander verschiedene, hydridbildende Metalllegierung (15a, 15b) aufweisen, welche unter Wärmezu- bzw. -abfuhr durch den jeweiligen Wärmetauscher (12a, 12b) zur zyklischen De- bzw. Absorption von Wasserstoff ausgebildet sind;
wobei der in jeder Rückgewinnungseinrichtung (10, 20) in Strömungsrichtung (S) zuerst angeordnete erste Metallhydridspeicher (11a, 21a) zur Erhöhung des Drucks des Leckgases von dem Leckgasdruck (*p*_{L}) auf einen im Vergleich zum Leckgasdruck (*p*_{L}) höheren ersten Zwischendruck (*p*₁) ausgebildet ist;
wobei der in jeder Rückgewinnungseinrichtung (10, 20) in Strömungsrichtung (S) zuletzt angeordnete letzte Metallhydridspeicher (11b, 21b) zur Erhöhung des Drucks des Leckgases auf den Saugdruck (*p*ₛ) ausgebildet ist; und
wobei die zwischen dem ersten (11a, 21a) und dem letzten Metallhydridspeicher (11b, 21b) angeordneten Metallhydridspeicher jeweils zur stufenweise Erhöhung des Drucks des Leckgases auf einen im Vergleich zum ersten Zwischendruck (*p*₁) höheren Zwischendruck (*p*₂, *p*₃ ... *p*ₙ) ausgebildet sind.

4. Gasverdichtungssystem (100) nach einem der vorhergehenden Ansprüche, wobei der Verdichter (1) als Kolbenverdichter, vorzugsweise als trockenlaufender Kolbenverdichter ausgebildet ist.

5. Gasverdichtungssystem (100) nach einem der vorhergehenden Ansprüche, wobei die verwendeten Metalllegierungen (15a, 15b, 25a, 25b) bei einer Temperatur von 60-100 °C einen Dissoziationsdruck von mindestens 30 bar, vorzugsweise mindestens 35 bar, und besonders bevorzugt mindestens 40 bar aufweisen.

6. Gasverdichtungssystem (100) nach einem der vorhergehenden Ansprüche, wobei die Metalllegierungen (15a, 15b, 25a, 25b) ausgewählt sind aus der Gruppe umfassend LaNi₅, ZrV₂, ZrMn₂, TiMn₂, FeTi, Zr₂Co und Ti₂Ni, bevorzugt aus der Gruppe umfassend LaNi₅, ZrV₂, ZrMn₂ und TiMn₂.

7. Gasverdichtungssystem (100) nach einem der vorhergehenden Ansprüche, wobei der Verdichter (1) ein Gehäuse (6) aufweist, welches im Wesentlichen nur bis 40 bar, bevorzugt bis 15 bar, besonders bevorzugt bis 2 bar, druckfest ausgebildet ist.

8. Gasverdichtungssystem (100) nach einem der vorhergehenden Ansprüche, wobei das Gasverdichtungssystem (100) stromabwärts der wenigstens einen Rückgewinnungseinrichtung (10, 20) und vor der Rückführung des Leckgases in die Stelle (5) im Gasverdichtungssystem (100) vor dem Verdichter (1) und/oder in die Saugleitung (3a) der Verdichterstufe (5a) frei von Behältern zur Speicherung des Leckgases ist.

9. Gasverdichtungssystem (100) nach einem der vorhergehenden Ansprüche, wobei die jeweiligen Wärmetauscher (12a, 12b, 22a, 22b) als Wärmeträgermedium eine Flüssigkeit mit einer Siedetemperatur bei Normaldruck zwischen 30°C und 180°C, bevorzugt zwischen 90 und 130°C, enthalten, insbesondere Wasser oder Wasser-Glykol-Gemische.

10. Gasverdichtungssystem (100) nach einem der vorhergehenden Ansprüche, wobei dem Verdichter (1) ein mit Kühlwasser kühlbarer Gaskühler (7) zur Kühlung des vom Verdichter (1) verdichteten Wasserstoffs nachgeschaltet ist, wobei der Gaskühler (7) und die Wärmetauscher (12a, 12b, 22a, 22b) der jeweiligen Rückgewinnungseinrichtungen (10, 20) derart miteinander verbunden sind, dass das bei der Kühlung des Gaskühlers (7) erwärmte Kühlwasser zumindest teilweise zur Wärmezufuhr für die jeweiligen Metallhydridspeicher (11a, 11b, 21a, 21b) nutzbar ist.

11. Gasverdichtungssystem (100) nach einem der vorhergehenden Ansprüche, wobei die Leckgasabführleitung (4) ein, insbesondere bei einem Druck von mehr als 2 bar in der Leckgasabführleitung (4) öffnendes, Überdruckventil (8) aufweist.

12. Gasverdichtungssystem (100) nach einem der vorhergehenden Ansprüche, wobei jeder Metallhydridspeicher (11a, 21a) jeweils zumindest ein Kombiventil (18) oder ein Ventilpaar bestehend aus einem dem jeweiligen Metallhydridspeicher (11a, 21a) in Strömungsrichtung vorgelagerten Einlassventil (13a, 23a) und einem dem jeweiligen Metallhydridspeicher (11a, 21a) in Strömungsrichtung nachgelagerten Auslassventil (14a, 24a) zur Be- und/oder Entladung des jeweiligen Metallhydridspeichers (11a, 21a) mit Leckgas aufweisen.

13. Gasverdichtungssystem (100) nach Anspruch 12, ferner aufweisend eine Ansteuereinrichtung (9) zur Ansteuerung der Ein- und Auslassventile (13a, 13b, 14a, 14b, 23a, 23b, 24a, 24b), wobei die Ein- und Auslassventile (13a, 13b, 14a, 14b, 23a, 23b, 24a, 24b) derart angesteuert sind, dass im betriebsgemässen Einsatz bei jedem in Strömungsrichtung benachbarten Ventilpaar zumindest eines der benachbarten Ventile geschlossen ist, um eine durchgehende, Fluid leitende Verbindung zwischen der Leckgasabführleitung (4) und der Leckgasrückführleitung (30) auszuschliessen.

14. Gasverdichtungssystem (100) nach einem der vorhergehenden Ansprüche, wobei
- zwischen den Metallhydridspeichern (11a, 11b, 21a, 21b) der jeweiligen Rückgewinnungseinrichtung (10, 20); und/oder
- in der Leckgasabführleitung (4); und/oder
- in der Leckgasrückführleitung (30)
wenigstens ein entgegen die Strömungsrichtung (S) schliessendes Rückschlagorgan (31, 32) angeordnet ist.

15. Verfahren zur Rückgewinnung von Wasserstoff, welcher aus einem Verdichter (1) als Leckgas austritt, vorzugsweise durchgeführt mit einem Gasverdichtungssystem (100) nach einem der Ansprüche 1 bis 14, das Verfahren umfassend die Schritte:
a) Einleiten des Leckgases in eine Rückgewinnungseinrichtung (10) mit zumindest einem Metallhydridspeicher (11a) enthaltend wenigstens eine hydridbildende Metalllegierung (15a);
b) Beladung des Metallhydridspeichers (11a) unter Absorption des eingeleiteten Leckgases durch die Metalllegierung (15a) und Bildung eines Metallhydrids;
c) Abführen der bei der Bildung des Metallhydrids freiwerdenden Wärme durch einen Wärmetauscher (12a), welcher mit dem Metallhydridspeicher (11a) wärmegekoppelt ist;
d) Aufheizen des gebildeten Metallhydrids auf eine vorbestimmte Temperatur durch den Wärmetauscher (12a) unter Desorption von zumindest einem Teil des zuvor absorbierten Leckgases;
e) Entladung des Metallhydridspeichers (11a) und Abgabe des desorbierten Leckgases aus der Rückgewinnungseinrichtung (10) an eine Leckgasrückführleitung (30) und in eine Stelle (5) im Gasverdichtungssystem (100) vor dem Verdichter (1) und/oder in die Saugleitung (3a) einer Verdichterstufe (5a), insbesondere in die Saugleitung (3b) der ersten Verdichterstufe (5b), des Verdichters, aus welchem das Leckgas stammt;
wobei der Druck des Leckgases durch den wenigstens einen Metallhydridspeicher (11a) der Rückgewinnungseinrichtung (10) von dem in der Leckgasabführleitung (4) herrschenden Leckgasdruck (*p*_{L}) auf wenigstens den in der Stelle (5) des Gasverdichtungssystems (100) herrschenden Druck (*p*) und/oder wenigstens den in der Saugleitung (3a) der Verdichterstufe (5a) herrschenden Saugdruck (*p*ₛ) erhöht wird.

16. Verfahren nach Anspruch 15,
wobei die Druckerhöhung des Leckgases vom Leckgasdruck (*p*_{L}) auf den Saugdruck (*p*ₛ) mehrstufig unter Verwendung von einer Mehrzahl von in Strömungsrichtung (S) des Leckgasstroms gesehen miteinander in Reihe geschalteter Metallhydridspeicher (11a, 11b) erfolgt;
wobei der in jeder Rückgewinnungseinrichtung (10, 20) in Strömungsrichtung (S) zuerst angeordnete erste Metallhydridspeicher (11a, 21a) den Drucks des Leckgases von dem Leckgasdruck (*p*_{L}) auf einen im Vergleich zum Leckgasdruck (*p*_{L}) höheren ersten Zwischendruck (*p*₁) erhöht;
wobei der in jeder Rückgewinnungseinrichtung (10, 20) in Strömungsrichtung (S) zuletzt angeordnete letzte Metallhydridspeicher (11b, 21b) den Druck des Leckgases auf den Saugdruck (*p*ₛ) erhöht; und
wobei die zwischen dem ersten (11a, 21a) und dem letzten Metallhydridspeicher (11b, 21b) angeordneten Metallhydridspeicher den Druck des Leckgases stufenweise auf einen im Vergleich zum ersten Zwischendruck (*p*₁) höheren Zwischendruck (*p*₂, *p*₃ ... *p*ₙ) erhöhen.

17. Verfahren nach einem der Ansprüche 15 oder 16, wobei das Verfahren kontinuierlich unter zyklischer Be- und Entladung zweier in Strömungsrichtung (S) parallel angeordneter Rückgewinnungseinrichtungen (10, 20) umfassend jeweils zumindest einen ersten Metallhydridspeicher (11a, 21a) durchgeführt wird.

18. Verfahren nach einem der Ansprüche 15 bis 17, wobei das Aufheizen des gebildeten Metallhydrids in Schritt d) zumindest teilweise mit Wasser erfolgt, welches aus der Kühlung eines dem Verdichter (1) nachgeschalteten Gaskühlers (7) erhalten wird.

19. Verfahren nach einem der Ansprüche 15 bis 18, wobei die Be- und Entladung jedes Metallhydridspeichers (11a) über zumindest ein Kombiventil (18) oder ein Ventilpaar bestehend aus einem dem jeweiligen Metallhydridspeicher (11a, 21a) in Strömungsrichtung (S) vorgelagerten Einlassventil (13a, 23a) und einem dem jeweiligen Metallhydridspeicher (11a, 21a) in Strömungsrichtung (S) nachgelagerten Auslassventil (14a, 24a) erfolgt, wobei die jeweiligen Ein- und Auslassventile (13a, 13b, 14a, 14b, 23a, 23b, 24a, 24b) durch eine Ansteuereinrichtung (9) derart angesteuert werden, dass eine durchgehende, Fluid leitende Verbindung zwischen der Leckgasabführleitung (4) und der Leckgasrückführleitung (30) ausgeschlossen wird.

20. Wasserstofftankstelle (40) umfassend ein Gasverdichtungssystem (100) nach einem der Ansprüche 1 bis 14, bevorzugt betrieben mit einem Verfahren nach einem der Ansprüche 15 bis 19.

## Claims

1. Gas compression system (100) with
- a compressor (1) for compressing hydrogen;
- at least one recovery device (10) for recovering hydrogen which escapes from the compressor (1) as leakage gas during compression; and
- a leakage gas return line (30) which is designed to return the leakage gas recovered by the at least one recovery device (10) into a stage (5) in the gas compression system (100) upstream of the compressor (1) and/or into the suction line (3a) of a compressor stage (5a), in particular into the suction line (3b) of the first compressor stage (5b), of the compressor (1) ;
wherein the compressor (1) comprises a leakage gas discharge line (4) for discharging the leakage gas from the compressor (1); and
wherein each recovery device (10) can be fluidically connected to the leakage gas discharge line (4) and the leakage gas return line (30);
**characterized in that** each recovery device has at least one metal hydride reservoir (11a), each of which is heat-coupled to a heat exchanger (12a);
wherein each metal hydride reservoir (11a) comprises at least one hydride-forming metal alloy (15a) which is designed for cyclic de- or absorption of leakage gas with heat supply or removal through the respective heat exchanger (12a); and
wherein each recovery device (10) is designed to increase the leakage gas pressure (*p*_{L}) prevailing in the leakage gas discharge line (4) to at least the pressure (*p*) prevailing in the stage (5) of the gas compression system (100) and/or to at least the suction pressure (*p*ₛ) prevailing in the suction line (3a) of the compressor stage (5a).

2. Gas compression system (100) according to claim 1, comprising a first recovery device (10) and a second recovery device (20) for loading and unloading the metal hydride reservoirs (11a, 21a) arranged in the respective recovery devices (10, 20) independently of one another in terms of time.

3. Gas compression system (100) according to claim 1 or 2,
wherein each recovery device (10) has a plurality of metal hydride reservoirs, in particular two metal hydride reservoirs (11a, 11b), which are connected in series with one another as viewed in the flow direction (S) of the leakage gas stream and are each heat-coupled to a heat exchanger (12a, 12b);
wherein the metal hydride reservoirs (11a, 11b) connected in series each have at least one hydride-forming metal alloy (15a, 15b), preferably different from one another, which are designed for the cyclic de- or absorption of hydrogen with heat supply or removal through the respective heat exchanger (12a, 12b);
wherein the first metal hydride reservoir (11a, 21a) arranged first in the direction of flow (S) in each recovery device (10, 20) is designed to increase the pressure of the leakage gas from the leakage gas pressure (*p*_{L}) to a first intermediate pressure (*p*₁) which is higher than the leakage gas pressure (*p*_{L});
wherein the last metal hydride reservoir (11b, 21b) arranged last in each recovery device (10, 20) in the direction of flow (S) is designed to increase the pressure of the leakage gas to the suction pressure (*p*ₛ); and
wherein the metal hydride reservoirs arranged between the first (11a, 21a) and the last metal hydride reservoir (11b, 21b) are each designed to gradually increase the pressure of the leakage gas to a higher intermediate pressure (*p*₂, *p*₃ ... *p*ₙ ) relative to the first intermediate pressure (*p*₁ ).

4. Gas compression system (100) according to one of the preceding claims, wherein the compressor (1) is designed as a piston compressor, preferably as a dry-running piston compressor.

5. Gas compression system (100) according to one of the preceding claims, wherein the metal alloys (15a, 15b, 25a, 25b) used have a dissociation pressure of at least 30 bar, preferably at least 35 bar, and particularly preferably at least 40 bar, at a temperature of 60-100 °C.

6. Gas compression system (100) according to any one of the preceding claims, wherein the metal alloys (15a, 15b, 25a, 25b) are selected from the group comprising LaNi₅, ZrV₂, ZrMn₂, TiMn₂, FeTi, Zr₂Co and Ti₂Ni, preferably from the group comprising LaNi₅, ZrV₂, ZrMn₂ and TiMn₂.

7. Gas compression system (100) according to one of the preceding claims, wherein the compressor (1) has a housing (6) which is designed to be essentially pressure-resistant only up to 40 bar, preferably up to 15 bar, particularly preferably up to 2 bar.

8. Gas compression system (100) according to one of the preceding claims, wherein the gas compression system (100) is free of containers for storing the leakage gas downstream of the at least one recovery device (10, 20) and before the leakage gas is returned to the stage (5) in the gas compression system (100) upstream of the compressor (1) and/or into the suction line (3a) of the compressor stage (5a).

9. Gas compression system (100) according to one of the preceding claims, wherein the respective heat exchangers (12a, 12b, 22a, 22b) contain a liquid with a boiling temperature at normal pressure of between 30°C and 180°C, preferably between 90 and 130°C, as heat transfer medium, in particular water or water-glycol mixtures.

10. Gas compression system (100) according to one of the preceding claims, wherein a gas cooler (7) which can be cooled with cooling water is connected downstream of the compressor (1) for cooling the hydrogen compressed by the compressor (1), wherein the gas cooler (7) and the heat exchangers (12a, 12b, 22a, 22b) of the respective recovery devices (10, 20) are connected to one another in such a way that the cooling water heated during the cooling of the gas cooler (7) can be used at least partially to supply heat to the respective metal hydride reservoirs (11a, 11b, 21a, 21b) .

11. Gas compression system (100) according to one of the preceding claims, wherein the leakage gas discharge line (4) has a pressure relief valve (8) which opens, in particular, at a pressure of more than 2 bar in the leakage gas discharge line (4).

12. Gas compression system (100) according to one of the preceding claims, wherein each metal hydride reservoir (11a, 21a) comprises at least one combination valve (18) or a valve pair consisting of an inlet valve (13a, 23a) upstream of the respective metal hydride reservoir (11a, 21a) in the direction of flow, and an outlet valve (14a, 24a) downstream in the direction of flow of the respective metal hydride reservoir (11a, 21a) for charging and/or discharging the respective metal hydride reservoir (11a, 21a) with leakage gas.

13. Gas compression system (100) according to claim 12, further comprising an actuating device (9) for actuating the inlet and outlet valves (13a, 13b, 14a, 14b, 23a, 23b, 24a, 24b), wherein the inlet and outlet valves (13a, 13b, 14a, 14b, 23a, 23b, 24a, 24b) are actuated in such a way such that, in operational use, at least one of the adjacent valves is closed for each pair of valves adjacent in the direction of flow, in order to exclude a continuous fluid-conducting connection between the leakage gas discharge line (4) and the leakage gas return line (30).

14. Gas compression system (100) according to one of the preceding claims, wherein
- between the metal hydride reservoirs (11a, 11b, 21a, 21b) of the respective recovery device (10, 20); and/or
- in the leakage gas discharge line (4); and/or
- in the leakage gas return line (30)
at least one non-return element (31, 32) closing against the direction of flow (S) is arranged.

15. A method for recovering hydrogen which emerges from a compressor (1) as leakage gas, preferably carried out with a gas compression system (100) according to any one of claims 1 to 14, the method comprising the steps of:
a) Introducing the leakage gas into a recovery device (10) with at least one metal hydride reservoir (11a) containing at least one hydride-forming metal alloy (15a);
b) Loading of the metal hydride reservoir (11a) with absorption of the introduced leakage gas by the metal alloy (15a) and formation of a metal hydride;
c) Removal of the heat released during the formation of the metal hydride by a heat exchanger (12a), which is heat-coupled to the metal hydride reservoir (11a);
d) Heating of the formed metal hydride to a predetermined temperature by the heat exchanger (12a) with desorption of at least part of the previously absorbed leakage gas;
e) discharging the metal hydride reservoir (11a) and discharging the desorbed leakage gas from the recovery device (10) to a leakage gas return line (30) and into a stage (5) in the gas compression system (100) upstream of the compressor (1) and/or into the suction line (3a) of a compressor stage (5a), in particular into the suction line (3b) of the first compressor stage (5b), of the compressor from which the leakage gas originates;
wherein the pressure of the leakage gas is increased by the at least one metal hydride reservoir (11a) of the recovery device (10) from the leakage gas pressure (*p*_{L}) prevailing in the leakage gas discharge line (4) to at least the pressure (*p*) prevailing in the stage (5) of the gas compression system (100) and/or at least the suction pressure (*p*ₛ) prevailing in the suction line (3a) of the compressor stage (5a).

16. Method according to claim 15,
wherein the pressure of the leakage gas is increased from the leakage gas pressure (*p*_{L}) to the suction pressure (*p*ₛ) in several stages using a plurality of metal hydride reservoirs (11a, 11b) connected in series with one another as viewed in the flow direction (S) of the leakage gas flow;
wherein the first metal hydride reservoir (11a, 21a) arranged first in the direction of flow (S) in each recovery device (10, 20) increases the pressure of the leakage gas from the leakage gas pressure (*p*_{L}) to a first intermediate pressure (*p*₁) which is higher than the leakage gas pressure (*p*_{L});
wherein the last metal hydride reservoir (11b, 21b) arranged last in the direction of flow (S) in each recovery device (10, 20) increases the pressure of the leakage gas to the suction pressure (*p*ₛ); and
wherein the metal hydride reservoirs arranged between the first (11a, 21a) and the last metal hydride reservoir (11b, 21b) increase the pressure of the leakage gas in stages to a higher intermediate pressure (*p*₂, *p*₃ ... *p*ₙ) relative to the first intermediate pressure (*p*₁).

17. Method according to one of claims 15 or 16, wherein the method is carried out continuously with cyclic charging and discharging of two recovery devices (10, 20) arranged in parallel in the flow direction (S) and each comprising at least one first metal hydride reservoir (11a, 21a).

18. The method according to any one of claims 15 to 17, wherein the heating of the formed metal hydride in step d) is carried out at least partially with water obtained from the cooling of a gas cooler (7) downstream of the compressor (1) .

19. Method according to one of claims 15 to 18, wherein the charging and discharging of each metal hydride reservoir (11a) takes place via at least one combination valve (18) or a valve pair consisting of an inlet valve (13a, 23a) upstream of the respective metal hydride reservoir (11a, 21a) in the direction of flow (S), and an outlet valve (14a, 24a) downstream of the respective metal hydride reservoir (11a, 21a) in the direction of flow (S), wherein the respective inlet and outlet valves (13a, 13b, 14a, 14b, 23a, 23b, 24a, 24b) are actuated by an actuating device (9) in such a way that a continuous fluid-conducting connection between the leakage gas discharge line (4) and the leakage gas return line (30) is excluded.

20. A hydrogen refueling station (40) comprising a gas compression system (100) according to any one of claims 1 to 14, preferably operated by a method according to any one of claims 15 to 19.

## Revendications

1. Système de compression de gaz (100) avec
- un compresseur (1) pour comprimer l'hydrogène ;
- au moins un dispositif de récupération (10) pour récupérer l'hydrogène qui s'échappe du compresseur (1) sous forme de gaz de fuite lors de la compression ; ainsi que
- une conduite de recyclage de gaz de fuite (30) qui est conçue pour recycler le gaz de fuite récupéré par ledit au moins un dispositif de récupération (10) dans un emplacement (5) dans le système de compression de gaz (100) avant le compresseur (1) et/ou dans la conduite d'aspiration (3a) d'un étage de compresseur (5a), en particulier dans la conduite d'aspiration (3b) du premier étage de compresseur (5b), du compresseur (1) ;
dans lequel le compresseur (1) comprend une conduite d'évacuation de gaz de fuite (4) pour évacuer le gaz de fuite du compresseur (1) ; et
dans lequel chaque dispositif de récupération (10) peut être relié fluidiquement à la conduite d'évacuation de gaz de fuite (4) et à la conduite de retour de gaz de fuite (30) ; **caractérisé en ce que** chaque dispositif de récupération comprend au moins un réservoir d'hydrure métallique (11a) couplé thermiquement à un échangeur de chaleur respectif (12a) ;
dans lequel chaque réservoir d'hydrure métallique (11a) présente au moins un alliage métallique (15a) formant un hydrure, qui est conçu pour la désorption ou l'absorption cyclique de gaz de fuite, avec apport ou évacuation de chaleur par l'échangeur de chaleur (12a) respectif ; et
chaque dispositif de récupération (10) étant conçu pour augmenter la pression de gaz de fuite (*p*_{L}) régnant dans la conduite d'évacuation de gaz de fuite (4) jusqu'à au moins la pression (*p*) régnant dans l'emplacement (5) du système de compression de gaz (100) et/ou jusqu'à au moins la pression d'aspiration (*p*ₛ) régnant dans la conduite d'aspiration (3a) de l'étage de compression (5a).

2. Système de compression de gaz (100) selon la revendication 1, comprenant un premier dispositif de récupération (10) et un deuxième dispositif de récupération (20) pour un chargement et un déchargement indépendants l'un de l'autre dans le temps des réservoirs d'hydrures métalliques (11a, 21a) disposés dans les dispositifs de récupération respectifs (10, 20).

3. Système de compression de gaz (100) selon la revendication 1 ou 2, dans lequel chaque dispositif de récupération (10) présente une pluralité de réservoirs d'hydrure métallique, en particulier deux réservoirs d'hydrure métallique (11a, 11b), qui, vus dans le sens d'écoulement (S) du flux de gaz de fuite, sont montés en série les uns avec les autres et sont couplés thermiquement chacun avec un échangeur de chaleur (12a, 12b) ;
les réservoirs d'hydrure métallique (11a, 11b) montés en série présentent chacun au moins un alliage métallique (15a, 15b) formant un hydrure, de préférence différent l'un de l'autre, qui sont conçus pour la désorption ou l'absorption cyclique d'hydrogène avec apport ou évacuation de chaleur par l'échangeur de chaleur (12a, 12b) respectif ;
dans lequel le premier réservoir d'hydrure métallique (11a, 21a) disposé en premier dans le sens d'écoulement (S) dans chaque dispositif de récupération (10, 20) est conçu pour augmenter la pression du gaz de fuite de la pression du gaz de fuite (*p*_{L}) à une première pression intermédiaire (*p*₁) plus élevée par rapport à la pression du gaz de fuite (*p*_{L}) ;
le dernier réservoir d'hydrure métallique (11b, 21b) disposé dans chaque dispositif de récupération (10, 20) en dernier dans la direction d'écoulement (S) étant conçu pour augmenter la pression du gaz de fuite jusqu'à la pression d'aspiration (*p*ₛ) ; et
les réservoirs d'hydrure métallique disposés entre le premier (11a, 21a) et le dernier réservoir d'hydrure métallique (11b, 21b) étant respectivement conçus pour augmenter progressivement la pression du gaz de fuite jusqu'à une pression intermédiaire (*p*₂, *p*₃ ... *p*ₙ ) plus élevée par rapport à la première pression intermédiaire (*p*₁).

4. Système de compression de gaz (100) selon l'une des revendications précédentes, dans lequel le compresseur (1) est un compresseur à piston, de préférence un compresseur à piston fonctionnant à sec.

5. Système de compression de gaz (100) selon l'une quelconque des revendications précédentes, dans lequel les alliages métalliques (15a, 15b, 25a, 25b) utilisés présentent une pression de dissociation d'au moins 30 bars, de préférence d'au moins 35 bars, et plus préférentiellement d'au moins 40 bars, à une température comprise entre 60 et 100°C.

6. Système de compression de gaz (100) selon l'une quelconque des revendications précédentes, dans lequel les alliages métalliques (15a, 15b, 25a, 25b) sont choisis dans le groupe comprenant LaNi₅, ZrV₂, ZrMn₂, TiMn₂, FeTi, Zr₂Co et Ti₂Ni, de préférence dans le groupe comprenant LaNi₅, ZrV₂, ZrMn₂ et TiMn₂.

7. Système de compression de gaz (100) selon l'une des revendications précédentes, dans lequel le compresseur (1) présente un boîtier (6) qui est conçu pour résister à la pression essentiellement seulement jusqu'à 40 bars, de préférence jusqu'à 15 bars, de manière particulièrement préférée jusqu'à 2 bars.

8. Système de compression de gaz (100) selon l'une quelconque des revendications précédentes, dans lequel le système de compression de gaz (100) est exempt de récipients pour le stockage du gaz de fuite en aval dudit au moins un dispositif de récupération (10, 20) et avant la réinjection du gaz de fuite dans l'emplacement (5) dans le système de compression de gaz (100) en amont du compresseur (1) et/ou dans la conduite d'aspiration (3a) de l'étage de compression (5a).

9. Système de compression de gaz (100) selon l'une des revendications précédentes, dans lequel les échangeurs de chaleur respectifs (12a, 12b, 22a, 22b) contiennent comme fluide caloporteur un liquide ayant une température d'ébullition à pression normale comprise entre 30°C et 180°C, de préférence entre 90 et 130°C, notamment de l'eau ou des mélanges eau-glycol.

10. Système de compression de gaz (100) selon l'une des revendications précédentes, dans lequel un refroidisseur de gaz (7) pouvant être refroidi par de l'eau de refroidissement est monté en aval du compresseur (1) pour refroidir l'hydrogène comprimé par le compresseur (1), le refroidisseur de gaz (7) et les échangeurs de chaleur (12a, 12b, 22a, 22b) des dispositifs de récupération respectifs (10, 20) sont reliés entre eux de telle sorte que l'eau de refroidissement réchauffée lors du refroidissement du refroidisseur de gaz (7) peut être utilisée au moins partiellement pour l'apport de chaleur aux réservoirs d'hydrures métalliques respectifs (11a, 11b, 21a, 21b).

11. Système de compression de gaz (100) selon l'une des revendications précédentes, dans lequel la conduite d'évacuation de gaz de fuite (4) comporte une vanne de surpression (8) s'ouvrant notamment à une pression supérieure à 2 bars dans la conduite d'évacuation de gaz de fuite (4).

12. Système de compression de gaz (100) selon l'une des revendications précédentes, dans lequel chaque réservoir d'hydrure métallique (11a, 21a) comprend au moins une soupape combinée (18) ou une paire de soupapes composée d'une soupape d'admission et d'une soupape d'évacuation, disposées en amont du réservoir d'hydrure métallique respectif (11a, 21a) en amont dans le sens d'écoulement et une soupape de sortie (14a, 24a) en aval dans le sens d'écoulement du réservoir d'hydrure métallique respectif (11a, 21a) pour charger et/ou décharger le réservoir d'hydrure métallique respectif (11a, 21a) avec du gaz de fuite.

13. Système de compression de gaz (100) selon la revendication 12, présentant en outre un dispositif de commande (9) pour la commande des soupapes d'admission et d'échappement (13a, 13b, 14a, 14b, 23a, 23b, 24a, 24b), les soupapes d'admission et d'échappement (13a, 13b, 14a, 14b, 23a, 23b, 24a, 24b) étant commandées de telle sorte, de telle sorte que, dans le cadre d'une utilisation conforme au fonctionnement, pour chaque paire de soupapes voisines dans le sens d'écoulement, au moins l'une des soupapes voisines est fermée afin d'exclure une liaison continue conduisant le fluide entre la conduite d'évacuation de gaz de fuite (4) et la conduite de retour de gaz de fuite (30).

14. Système de compression de gaz (100) selon l'une quelconque des revendications précédentes, dans lequel
- entre les réservoirs d'hydrure métallique (11a, 11b, 21a, 21b) du dispositif de récupération respectif (10, 20) ; et/ou
- dans la conduite d'évacuation des gaz de fuite (4) ; et/ou
- dans la conduite de retour des gaz de fuite (30)
au moins un organe de retenue (31, 32) fermant dans le sens opposé au sens d'écoulement (S) est disposé.

15. Procédé de récupération d'hydrogène sortant d'un compresseur (1) sous forme de gaz de fuite, de préférence réalisé avec un système de compression de gaz (100) selon l'une des revendications 1 à 14, le procédé comprenant les étapes consistant à :
a) l'introduction du gaz de fuite dans un dispositif de récupération (10) avec au moins un réservoir d'hydrure métallique (11a) contenant au moins un alliage métallique formant un hydrure (15a) ;
b) chargement du réservoir d'hydrure métallique (11a) avec absorption du gaz de fuite introduit par l'alliage métallique (15a) et formation d'un hydrure métallique ;
c) l'évacuation de la chaleur libérée lors de la formation de l'hydrure métallique par un échangeur de chaleur (12a) qui est couplé thermiquement au réservoir d'hydrure métallique (11a) ;
d) le chauffage de l'hydrure métallique formé à une température prédéterminée par l'échangeur de chaleur (12a) avec désorption d'au moins une partie du gaz de fuite précédemment absorbé ;
e) décharge du réservoir d'hydrure métallique (11a) et délivrance du gaz de fuite désorbé du dispositif de récupération (10) à une conduite de retour de gaz de fuite (30) et dans un emplacement (5) dans le système de compression de gaz (100) avant le compresseur (1) et/ou dans la conduite d'aspiration (3a) d'un étage de compresseur (5a), en particulier dans la conduite d'aspiration (3b) du premier étage de compresseur (5b), du compresseur d'où provient le gaz de fuite ;
la pression du gaz de fuite étant augmentée par l'au moins un réservoir d'hydrure métallique (11a) du dispositif de récupération (10) de la pression du gaz de fuite (*p*_{L}) régnant dans la conduite d'évacuation du gaz de fuite (4) à au moins la pression (*p*) régnant dans l'emplacement (5) du système de compression de gaz (100) et/ou au moins la pression d'aspiration (*p*ₛ) régnant dans la conduite d'aspiration (3a) de l'étage de compression (5a).

16. Procédé selon la revendication 15, dans lequel l'augmentation de la pression du gaz de fuite de la pression du gaz de fuite (*p*_{L}) à la pression d'aspiration (*p*ₛ) s'effectue en plusieurs étapes en utilisant une pluralité d'réservoirs d'hydrure métallique (11a, 11b) montés en série les uns avec les autres, vu dans le sens d'écoulement (S) du flux de gaz de fuite ;
dans lequel le premier réservoir d'hydrure métallique (11a, 21a) disposé en premier dans chaque dispositif de récupération (10, 20) dans la direction d'écoulement (S) augmente la pression du gaz de fuite de la pression du gaz de fuite (*p*_{L}) à une première pression intermédiaire (*p*₁) plus élevée par rapport à la pression du gaz de fuite (*p*_{L}) ;
le dernier réservoir d'hydrure métallique (11b, 21b) disposé dans chaque dispositif de récupération (10, 20) en dernier dans la direction d'écoulement (S) augmentant la pression du gaz de fuite jusqu'à la pression d'aspiration (*p*ₛ) ; et
dans lequel les réservoirs d'hydrure métallique disposés entre le premier (11a, 21a) et le dernier réservoir d'hydrure métallique (11b, 21b) augmentent progressivement la pression du gaz de fuite jusqu'à une pression intermédiaire (*p*₂ , *p*₃ ... *p*ₙ) plus élevée par rapport à la première pression intermédiaire (*p*₁).

17. Procédé selon l'une des revendications 15 ou 16, dans lequel le procédé est mis en œuvre en continu avec chargement et déchargement cycliques de deux dispositifs de récupération (10, 20) disposés en parallèle dans le sens de l'écoulement (S) et comprenant chacun au moins un premier réservoir d'hydrures métalliques (11a, 21a).

18. Procédé selon l'une quelconque des revendications 15 à 17, dans lequel le chauffage de l'hydrure métallique formé à l'étape d) est effectué au moins en partie avec de l'eau obtenue à partir du refroidissement d'un refroidisseur de gaz (7) situé en aval du compresseur (1).

19. Procédé selon l'une des revendications 15 à 18, dans lequel le chargement et le déchargement de chaque réservoir d'hydrure métallique (11a) s'effectuent par l'intermédiaire d'au moins une vanne combinée (18) ou d'une paire de vannes composée d'une vanne d'entrée (13a, 23a) placée en amont du réservoir d'hydrure métallique respectif (11a, 21a) dans le sens de l'écoulement (S) et d'une vanne de sortie (13b, 23b) placée en aval du réservoir d'hydrure métallique respectif (11a, 21a) en aval dans le sens d'écoulement (S), les soupapes d'entrée et de sortie respectives (13a, 13b, 14a, 14b, 23a, 23b, 24a, 24b) étant commandées par un dispositif de commande (9) de telle sorte qu'une liaison continue conduisant le fluide entre la conduite d'évacuation de gaz de fuite (4) et la conduite de retour de gaz de fuite (30) est exclue.

20. Station-service à hydrogène (40) comprenant un système de compression de gaz (100) selon l'une quelconque des revendications 1 à 14, de préférence exploité avec un procédé selon l'une quelconque des revendications 15 à 19.
